# EUROPEAN PATENT APPLICATION

(11) **EP 1 783 763 A1**
(43) Date of publication of application: **09.05.2007**
(21) Application number: 05766381.7
(22) Date of filing: 15.07.2005
(51) Int. Cl.: G11B 17/26

(54) **INFORMATION RECORDING MEDIUM REPRODUCING DEVICE**

(30) Priority: 23.07.2004 JP 2004215579
(71) Applicant: Pioneer Corporation, Tokyo 153-8654 (JP); Tohoku Pioneer Corporation, Tendo-shi, Yamagata 994-8585 (JP)
(72) Inventor: MIZOGUCHI, Takashi, c/o Pioneer Corporation, Kawagoe-shi, Saitama 3508555 (JP); TAKAHASHI, Hideaki, c/o Pioneer Corporation, Kawagoe-shi, Saitama 3508555 (JP); SAITOU, Kazuhiro, c/o Tohoku Pioneer Corporation, Tendo-shi, Yamagata 9948585 (JP); SHIMOSAWA, Ryosuke, c/o Pioneer Corporation, Kawagoe-shi, Saitama 3508555 (JP); MUTO, Akihiro, c/o Pioneer Corporation, Kawagoe-shi, Saitama 3508555 (JP); SHINKAI, Yasuhiro, c/o Pioneer Corporation, Kawagoe-shi, Saitama 3508555 (JP); SUZUKI, Toru, c/o Pioneer Corporation, Kawagoe-shi, Saitama 3508555 (JP)
(74) Representative: Grünecker, Kinkeldey, Stockmair & Schwanhäusser Anwaltssozietät
(86) International application number: PCT/JP2005/013169
(87) International publication number: WO 2006/009116

(57) **Abstract**

For providing an information recording medium playback apparatus, which can miniaturize a transporting unit to insert and eject an information recording medium for miniaturizing as a whole, the CD changer 1 includes an apparatus main body and a disk-transporting unit 4. The disk-transporting unit 4 includes a transporting roller 13 and a guide member 82. The transporting roller 13 and the guide member 82 are energized in a direction to be close to each other. The apparatus main body includes pushing members 80, 81 to separate the transporting roller 13 from the guide member 82 when the disk-transporting unit 4 is positioned in an insert/eject position for inserting and ejecting the CD.

## Description

### Field of the Invention

This invention relates to an information recording medium playback apparatus, especially, information recording medium playback apparatus, which receives an information recording medium in an apparatus main body and playbacks information recorded in the information recording medium.

### Background of the Invention

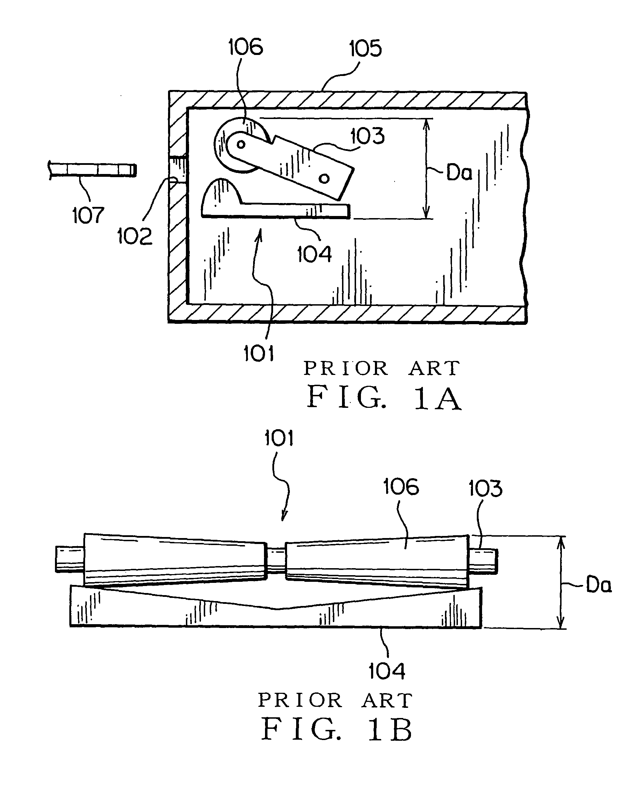

An information recording medium playback apparatus for receiving plural information recording media 107 (shown in Fig. 1) such as a compact disc (call CD hereafter), and reading the information recorded in any one information recording medium 107 from among the plural information recording media 107 (refer Patent Document 1) is used. Such information recording medium playback apparatus is installed in a vehicle, and includes the apparatus main body 105 (shown in Fig. 1), a plurality of holding members, a separating mechanism, a playback mechanism and a transporting unit 101 (shown in Fig. 1).

The apparatus main body 105 is formed into a flat rectangular box shape. The holding member holds the information recording medium 107. The plurality of holding members to be stacked to each other is received in the apparatus main body 105. The separating mechanism moves respectively the plurality of holding members along a direction to stack the holding members. The separating mechanism separates one holding member holding the information recording medium 107 to be played back the information from the other holding members by moving the plurality of holding members.

The playback mechanism includes a swing chassis mounted on the apparatus main body 105 rotatably around one end thereof and a pick-up drive unit arranged on the swing chassis. The pick-up drive unit includes a moving frame mounted movably on the swing chassis, a turntable mounted on the moving frame and an optical pick-up. The turntable clamps the information recording medium and rotates the information recording medium. The optical pick-up moves close to and apart from the turntable, and reads the information from a specified position on an information recording surface of the information recording medium.

The transporting unit 101 is arranged in the vicinity of an insertion opening 102 provided in the apparatus main body 105 for inserting and ejecting the information recording medium 107. The transporting unit 101, as shown in Figs. 1A, 1B, includes a transporting roller 103 and a guide member 104. The transporting roller 103 is fixed on the apparatus main body 105, and supports a roller 106 rotatably. The guide member 104 is fixed on the apparatus main body 105, and is formed into a plate shape with a resin having a low coefficient of friction against the information recording medium 107. The guide member 104 is arranged to have a space between the roller 106 supported rotatably by the transporting roller 103.

The transporting unit 101 positions the information recording medium 107 between the transporting roller 103 and the guide member 104, and clamps the information recording medium 107 between the roller 106 and the guide member 104, and rotates the roller 106. Thereby, the transporting unit 101 inserts and ejects the information recording medium 107 against the apparatus main body 105. In the aforesaid information recording medium playback apparatus, the separating mechanism separates the holding member, which holds the one information recording medium 107, from the other holding members.

In the information recording medium playback apparatus, the swing chassis of the playback mechanism rotates around the one end thereof, and the pick-up drive unit penetrates between the one information recording medium 107 and the other information recording medium 107. In the information recording medium playback apparatus, the optical pick-up reads out the information from the information recording medium 107, and plays back the read-out information. In the information recording medium playback apparatus, the when the separating mechanism moves the holding member, the swing chassis, that is the pick-up drive unit is extracted from a space between the one information recording medium 107 and the other information recording medium 107. Patent Document 1 is JP2003-331496.

### SUMMERY OF INVENTION

### Objects to be solved

In the transporting unit 101 of the information recording medium playback apparatus by prior art shown in Fig. 1, the transporting roller 103 and guide member 104 are both fixed on the apparatus main body 105. Therefore, when the plurality of holding members moves to be piled to each other, the information recording medium playback apparatus has a larger depth so as to prevent interference (contact) between the transporting unit 101, the swing chassis and the plurality of holding members.

For shortening the depth of the information recording medium playback apparatus, it is considered that by arranging the swing chassis at a right surface of the apparatus main body when viewing from a user and stacking the swing chassis and the transporting unit 101 up and down, the swing chassis and the transporting unit 101 can be made to move up and down. Thereby, total height Da of the transporting unit 101 including the transporting roller 103 and the guide member 104 is made thicker. In other words, the transporting unit 101 has a larger size, and the apparatus main body 105 has a thicker height, so that the apparatus main body 101 is made larger.

An object of this invention is to provide an information recording medium playback apparatus, which can miniaturize total volume by miniaturizing the transporting unit for inserting and ejecting the information recording medium.

### How to attain the object

In order to attain the objects, an information recording medium playback apparatus according to this invention, including an apparatus main body receiving an information recording medium and a transporting unit transporting the information recording medium inserted into the apparatus main body to a receiving position in the apparatus main body is characterized in that the transporting unit moves within a predetermined range in a direction intersecting a main surface of the information recording medium and includes a pair of clamp members clamping the information recording medium to be transported, and the clamp members move apart from each other in the direction intersecting the main surface of the information recording medium at one position within the predetermined range and move close to each other at the other position within the predetermined range.

### BRIEF DESCRIPTION OF THE DRAWINGS

Fig. 1A is a side view of a transporting unit of a CD changer by prior art;
Fig. 1B is a front view of the transporting unit of the CD changer by prior art;
Fig. 2 is a perspective view showing an appearance of the CD changer as an information recording medium playback apparatus of one embodiment according to the present invention;
Fig. 3 is a perspective view showing a fixed chassis, a disk-transporting unit, a disk-playback unit, a disk-receiving unit and a separating mechanism, assembled in the CD changer shown in 2;
Fig. 4 is a exploded perspective view showing partially disassembled the fixed chassis, the disk-playback unit and the disk-receiving unit shown in Fig. 3;
Fig. 5 is a perspective view showing a condition of assembling the disk-receiving unit and a drive chassis shown in Fig. 4;
Fig. 6 is a perspective view of a holder of the disk-receiving unit and a spacing groove expanding mechanism shown in Fig. 3;
Fig. 7 is an expanded perspective view of the spacing groove expanding mechanism shown in Fig. 6;
Fig. 8 is a perspective view showing a condition that a moving member of the spacing groove expanding mechanism shown in Fig. 7 moves mostly apart from a second wall, and a projection of one holder and a guide groove corresponds to each other;
Fig. 9 is a perspective view showing a condition that a cam member of the spacing groove expanding mechanism in the condition shown in Fig. 8 rotates so as to position the projection at a playback position of the guide groove;
Fig. 10 is a perspective view showing a condition that the cam member of the spacing groove expanding mechanism shown in Fig. 7 moves mostly close to the second wall, and the projection of one holder and the guide groove corresponds to each other;
Fig. 11 is a perspective view showing a condition that the cam member of the spacing groove expanding mechanism in the condition shown in Fig. 10 rotates so as to position the projection at a loading position of the guide groove;
Fig. 12 is an expanded perspective view of the spacing groove expanding mechanism shown in Fig. 7;
Fig. 13 is a perspective view showing a condition that the cam member and the moving member of the spacing groove expanding mechanism shown in Fig. 12 position at the top position;
Fig. 14 is a perspective view showing a condition that the moving member of the spacing groove expanding mechanism shown in Fig. 12 positions at the top position, and the cam member positions at a central area;
Fig. 15 is an exploded perspective view of the spacing groove expanding mechanism shown in Fig. 12;
Fig. 16 is a developmental view of developing the cam member, a rotating member and the moving member of the spacing groove expanding mechanism shown in Fig. 7 in a circumferential direction;
Fig. 17 is a developmental view showing typically a condition that the guide groove of the cam member and the projection of one holder shown in Fig. 16 correspond to each other;
Fig. 18 is a developmental view showing typically a condition that the cam member in the condition shown in Fig. 17 rotates and starts to insert the projection into the guide groove;
Fig. 19 is a developmental view showing typically a condition that the cam member in the condition shown in Fig. 18 further rotates and the projection positions in the loading position of the guide groove;
Fig. 20 is a developmental view showing typically a condition that the cam member in the condition shown in Fig. 19 further rotates and the projection positions in a pick-up inserting position of the guide groove;
Fig. 21 is a developmental view showing typically a condition that the cam member in the condition shown in Fig. 20 further rotates and the projection positions in a clamp position of the guide groove;
Fig. 22 is a developmental view showing typically a condition that the cam member in the condition shown in Fig. 21 further rotates and the projection positions in a playback position of the guide groove;
Fig. 23 is a developmental view showing typically a condition that the projection of a second holder from a bottom shown in Fig. 22 positions in the playback position of the guide groove;
Fig. 24 is a developmental view showing typically a condition that the projection of a second holder from a top shown in Fig. 22 positions in the playback position of the guide groove;
Fig. 25 is a developmental view showing typically a condition that the cam member shown in Fig. 16 moves mostly close to the second wall;
Fig. 26 is a developmental view showing typically a condition that the projection of one holder and the guide groove of the cam member shown in Fig. 25 correspond to each other;
Fig. 27 is a developmental view showing typically a condition that the cam member in the condition shown in Fig. 26 rotates and starts to insert the projection into the guide groove;
Fig. 28 is a developmental view showing typically a condition that the cam member in the condition shown in Fig. 27 further rotates and the projection positions in the loading position of the guide groove;
Fig. 29 is a developmental view showing typically a condition that the projection of a second holder from the top shown in Fig. 28 positions in the loading position of the guide groove;
Fig. 30 is a developmental view showing typically a condition that the projection of a second holder from the bottom shown in Fig. 28 positions in the loading position of the guide groove;
Fig. 31 is a plan view of an interlocking moving mechanism in the condition shown in Fig. 16;
Fig. 32 is a plan view of an interlocking moving mechanism in the condition shown in Fig. 17;
Fig. 33 is a plan view of an interlocking moving mechanism in the condition shown in Fig. 23;
Fig. 34 is a plan view of an interlocking moving mechanism in the condition shown in Fig. 24;
Fig. 35 is a plan view of an interlocking moving mechanism in the condition shown in Fig. 25;
Fig. 36 is a plan view of an interlocking moving mechanism in the condition shown in Fig. 26;
Fig. 37 is a plan view of an interlocking moving mechanism in the condition shown in Fig. 29;
Fig. 38 is a plan view of an interlocking moving mechanism in the condition shown in Fig. 30;
Fig. 39 is a plan view of the holder and the disk-transporting unit of the CD changer shown in Fig. 2;
Fig. 40 is a perspective view showing a condition that the disk-transporting unit of the CD changer shown in Fig. 2 is positioned in an escape position;
Fig. 41 is a perspective view showing a condition that the disk-transporting unit of the CD changer shown in Fig. 2 is positioned in an insertion/ejection position;
Fig. 42 is a perspective view, when viewed from the other direction, showing a condition that the disk-transporting unit of the CD changer shown in Fig. 2 is positioned in the insert/eject position;
Fig. 43 is a front view showing typically a condition that the disk-transporting unit of the CD changer shown in Fig. 2 is positioned in the escape position;
Fig. 44 is a front view showing typically a condition that the disk-transporting unit of the CD changer shown in Fig. 2 is positioned in the insert/eject position;
Fig. 45 is a side view showing typically the disk-transporting unit of the CD changer when viewed from an arrow A in Fig. 43;
Fig. 46 is a side view showing typically the disk-transporting unit of the CD changer when viewed from an arrow C in Fig. 44;
Fig. 47 is a side view showing typically the disk-transporting unit of the CD changer when viewed from an arrow B in Fig. 43; and
Fig. 48 is a side view showing typically the disk-transporting unit of the CD changer when viewed from an arrow D in Fig. 44.

### MARKINGS

- 1: CD changer (Information recording medium playback apparatus)
- 2: CD (Information recording medium)
- 3: Apparatus main body
- 4: Disk-transporting unit (Transporting unit)
- 5: Disk-playback unit
- 13: Transporting roller (Clamp member)
- 16: Moving chassis (Support member)
- 80, 81: Pushing device (Pushing member)
- 82: Guide unit (Clamp member)
- 82a: Bump
- K: Direction intersecting a main surface of CD (Direction intersecting the main surface of the information recording medium)

### DESCRIPTION OF THE BEST MODE

An information recording medium playback apparatus of one embodiment according to this invention will be described herein. In the information recording medium playback apparatus according to the embodiment, at one position in a predetermined range in which a transporting unit moves, clamp members are made apart from each other, and at the other position, the clamp members are made close to each other. Thereby, a total thickness of the transporting unit including a pair of clamp members is limited. Thus, the transporting unit, that is whole of the information recording medium playback apparatus can be miniaturized.

The one position can be in the vicinity of one end of the predetermined range and the other position can be in the vicinity of the other end of the predetermined range.

The transporting unit can move along the direction intersecting the main surface of the information recording medium, interlocking the playback unit to read the information out from the information recording medium.

### DESCRIPTION OF EMBODIMENTS

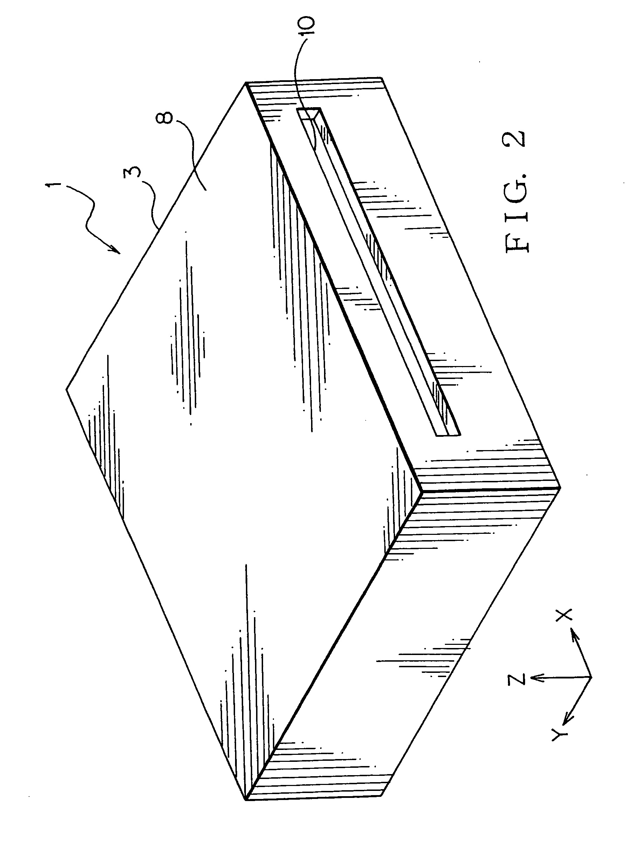

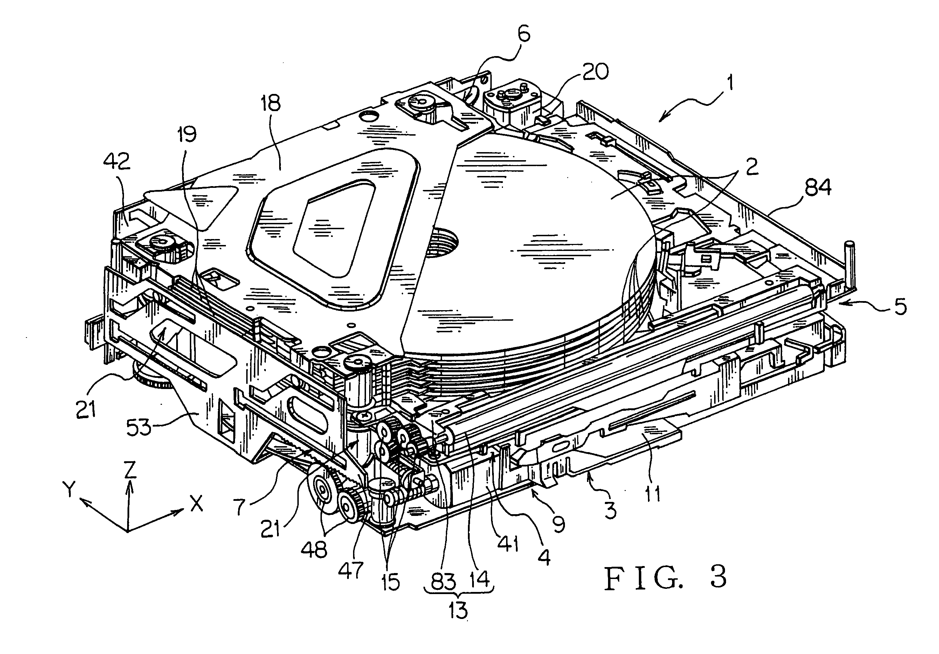

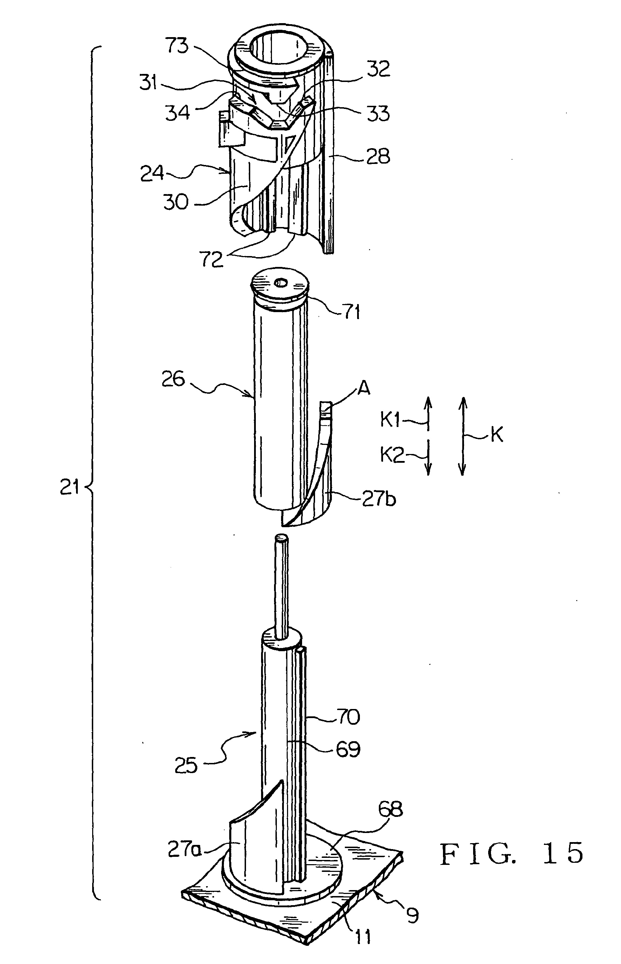

CD changer 1 as an information recording medium playback apparatus of one embodiment according to the present invention will be described with reference to Figs. 2-48. The CD changer 1 as shown in Fig. 2 is installed in a vehicle like a car for storing plural CDs 2 (shown in Fig. 3) as an information recording medium and outputting sounds and voices by reading (playing back) information recorded on any one of the CDs 2. The CD 2 formed into a circular plate, that is a disc-shape, is the information recording medium to store information which can be read by an electronic device like a computer.

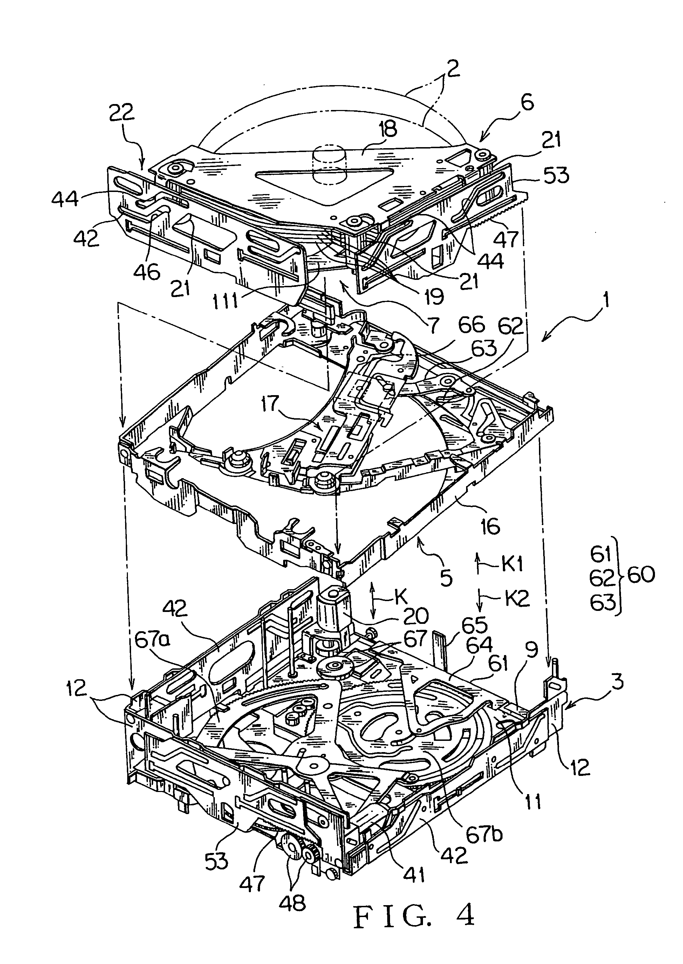

The CD changer 1, as shown in Fig. 3, includes an apparatus main body 3 (shown in Fig. 2), an operation panel (not shown), a disk-transporting unit 4 as a transporting unit, a disk-playback unit 5, a moving mechanism 60 (shown in Fig. 4) as a moving unit, a disk-receiving unit 6 as a receiving unit, and a separating mechanism 7 as a separating unit. A direction shown with an arrow X in Fig. 3 is defined as a widthwise direction of the CD changer 1, and a direction shown with an arrow Y in Fig. 3 is defined as a depthwise direction of the CD changer 1, and a direction shown with an arrow Z in Fig. 2 is defined as a thickness direction of the CD changer 1.

The apparatus main body 3 includes an outer case 8 made of sheet metal shown in Fig. 2 and a fixed chassis 9 made of sheet metal shown in Fig. 3. The outer box 8 is formed into a flat rectangular box shape. The outer case 8 is provided with an insertion opening 10, through which the CD 2 can be inserted/ejected. The insertion opening 10 pierces an outer wall of the outer case 8. The insertion opening 10 can passes the CD 2 through an inside thereof. Through the insertion opening 10, the CD 2 is received into the outer case 8, that is the apparatus main body 3, and ejected out of the main body 3.

The fixed chassis 9 is received in the outer case 8 so as to be fixed on the outer case 8. The fixed chassis 9, as shown in Fig. 4, includes a plate-shaped bottom plate 11, a surrounding plate 12 extending from outer edges of the bottom plate 11 and a top plate (not shown) opposing to the bottom plate with a space. The bottom plate 11 is piled on a wall, arranged at a lower side in Fig. 2, of the outer case 8.

The top wall is continued to edges, far from the bottom plate, of the surrounding plate 12. The top plate is arranged in parallel to the bottom plate 11. The top plate is a wall at one side, that is later-described arrow K1 side in the specification. The bottom plate is a wall at the other side, that is later-described arrow K2 side in the specification. The apparatus main body 3 as structured above receives a plurality of CDs 2 by receiving the disk-receiving unit 6 to receive CDs 2.

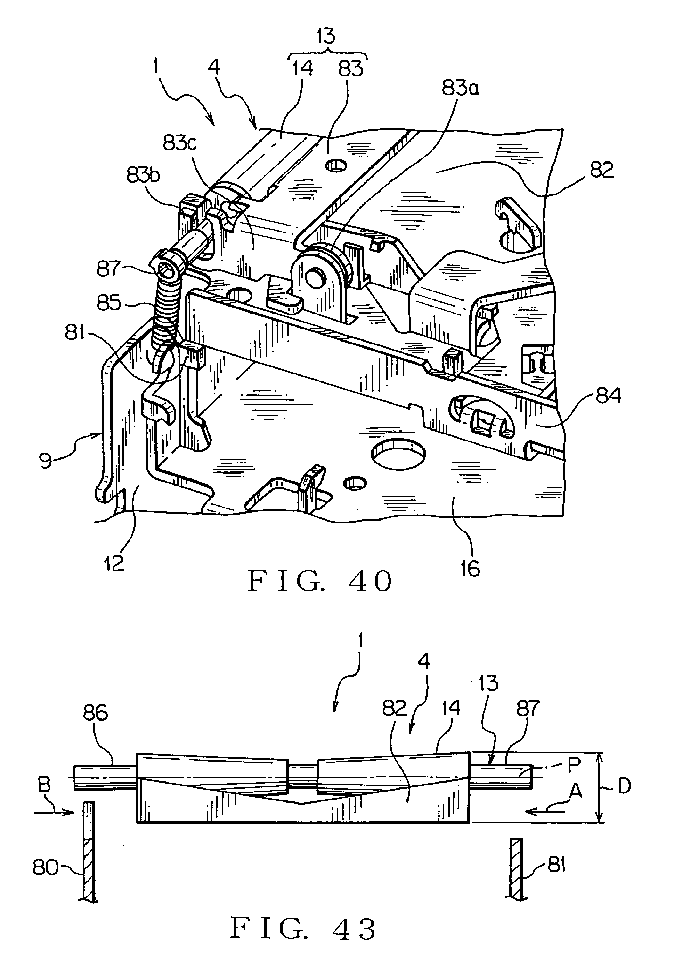

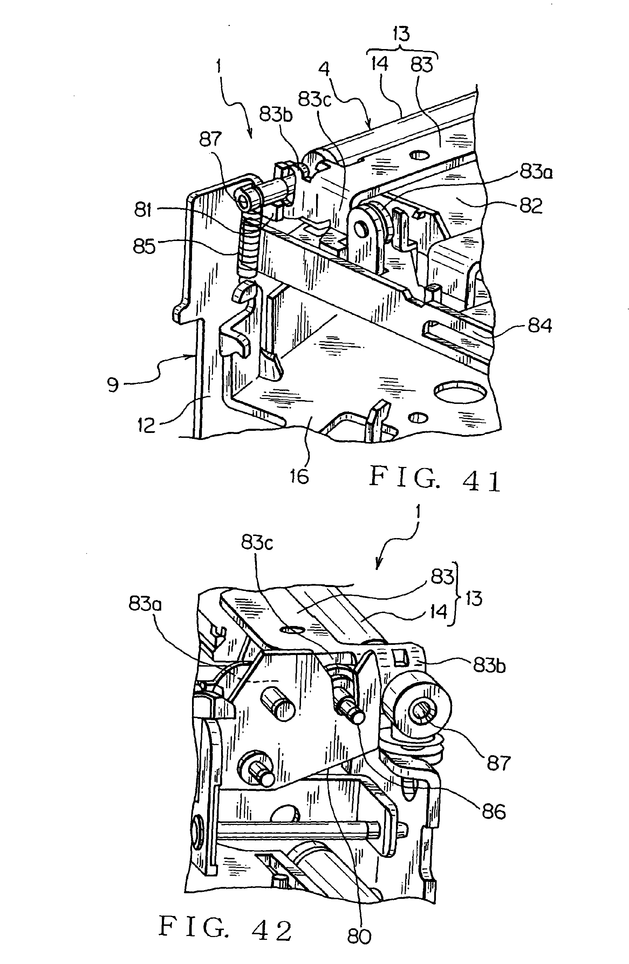

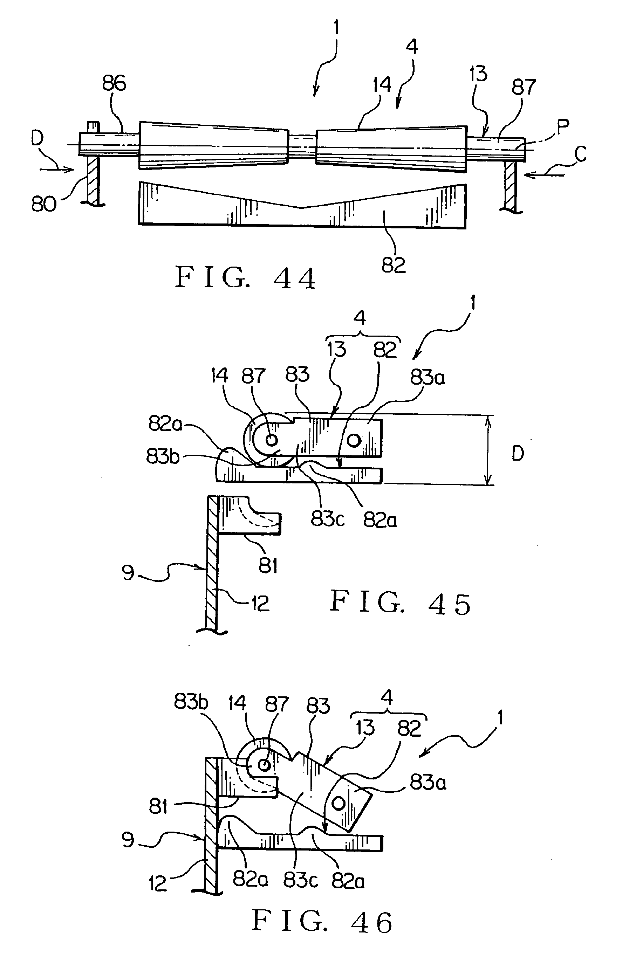

The apparatus main body 3 includes a pair of pushing devices 80, 81 (shown in Figs. 43, 44). The pair of pushing devices 80, 81 positions the disk-transporting unit 4 between each other along a widthwise direction of the apparatus main body 3. The pushing devices 80, 81 are arranged in the vicinity of the insertion opening 10. One pushing device 80 (shown in Fig. 42) extends vertically from the bottom plate 11 of the fixed chassis 9. The other pushing device 81 (shown in Figs. 40, 41) extends from the surrounding plate 12, in which the insertion opening 10 of the fixed chassis 9 is formed, along the depthwise direction Y of the apparatus main boy 3 toward a depth end of the apparatus main body 3.

When the disk-transporting unit 4 is positioned at a later-described insert/eject position, the pushing devices 80, 81 abut on projecting pins 86, 87 of a later-described transporting roller 13, and push a roller 14 of the transporting roller 13 to move apart from a guide unit 82 against an energizing force of a coil spring 85. When the disk-transporting unit 4 is positioned at the later-described insert/eject position, the pushing devices 80, 81 move the roller 14 of the transporting roller 13 apart from the guide unit 82. Thus, when the disk-transporting unit 4 is positioned at the later-described insert/eject position, the pushing devices 80, 81 abut on the roller 14, that is the transporting roller 13, and move the transporting roller 13 from the guide unit 82 so as to allow the roller 14 of the transporting roller 13 and the guide unit 82 to clamp the CD 2 therebetween. The pushing devices 80, 81 corresponding to pushing members in the specification.

An operation panel is a separated body from the apparatus main body 3 and is connected to the apparatus main body 3. The operation panel is operated by a user of the CD changer 1 pushing it. The operation panel operated by the user is used for selecting a later-described holder 19 to hold the CD 2 inserted through the insertion opening 10 in the apparatus main body 3. The operation panel operated by the user is used for selecting the holder 19 holding the CD 2 to be ejected through the insertion opening 10 in the apparatus main body 3. The operation panel operated by the user is used for selecting the CD 2 to be read information from among the CDs held by the plural holders 19.

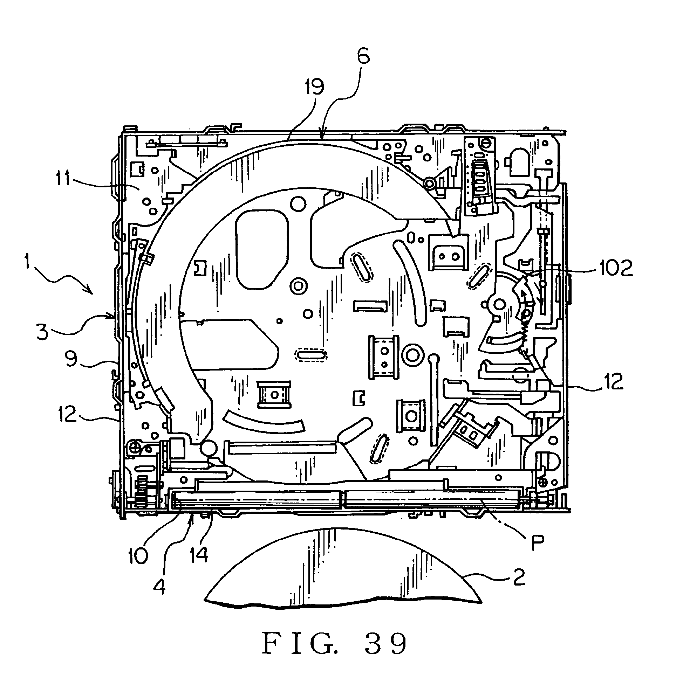

The disk-transporting unit 4 is received in the apparatus main body 3 and arranged in the vicinity of the insertion opening 10, as shown in Fig. 39. The disk-transporting unit 4 includes the transporting roller 13 and the guide unit 82 as shown in Figs. 43-48. The transporting roller 13 has an arm body 83 and the roller 14. The arm body 83 is formed into a band shape, lengthwise of which is along the widthwise direction X of the apparatus main body 3, with the sheet metal. The arm body 83, that is the transporting roller 13 is arranged in a load frame 84 (shown in Fig. 3) fixed on a later-described moving chassis 16, which is supported movably up-and-down by the fixed chassis 9 of the apparatus main body 3.

The transporting roller 13 is supported by the load frame 84, rotatably around one end 83a apart from the insertion opening 10 in a widthwise direction of the arm body 83. A rotating axis of the arm body 83, that is the transporting roller 13 is in parallel to the widthwise direction X of the apparatus main body 3. A coil spring 85 as an energizing member is hooked between a later-described projecting pin 87 of the roller 14 of the transporting roller 13 and the moving chassis 16. The coil spring 85 energizes the other end 83b close to the insertion opening 10 in a widthwise direction of the arm body 83 to be close to the guide unit 82. Thus, the arm body 83, that is the transporting roller 13 is energized to be close to the guide unit 82.

The roller 14 is supported rotatably around an axis P thereof at the other end 83b close to the insertion opening 10 in a widthwise direction of the arm body 83 of the transporting roller 13.
The axis P of the roller 14 is in parallel to the widthwise direction X of the apparatus main body 3. An outer surface of the roller 14 touches the CD 2 passed through the insertion opening 10. The roller 14 is rotated around the axis P through plural gears 15 by a later-described motor 41.

The transporting roller 13 has the projecting pins 86, 87 (shown in Figs. 40-42). The projecting pins 86, 87 project from an edge in the widthwise direction X of the arm body 83 along the widthwise direction X. The projecting pin 87 is arranged coaxially with the axis P of the roller 14 to project from the other end 83b of the arm body 83. The projecting pin 86 projects from a central porting 83c between the one end 83a and the other end 83b of the arm body 83.

The guide unit 82 is formed into a band-shape, lengthwise of which is along the widthwise direction X of the apparatus main body 3. The guide unit 82 has a bump 82a to tough a surrounding edge of the CD 2 as the information recording medium, and is made of synthetic resin with low coefficient of friction. In other words, the bump 82a is formed to project toward the CD 2 and extend linearly in a direction perpendicular (intersecting) to a transport direction of transporting the CD 2. The bumps 82a are formed with a space at two positions, between which the roller 14 is positioned. In other words, a position in which the bump 82a touches the CD 2, is distant from the axis P of the roller 14 of the transporting roller 13 along the direction of transporting the CD 2. The guide unit 82 is arranged between the transporting roller 13 and the load frame 84 and mounted on the load frame 84.

The transporting roller 13 and the guide unit 82 to clamp the CD 2 therebetween, and insert the CD 2 into and eject the CD 2 from the apparatus main body 3 correspond to clamp members. The transporting roller 13 and the guide unit 82 are energized to move close to each other, and are close to each other at a position other than the insert/eject position.

The disk-transporting unit 4 is mounted on the load frame 84, and moved integrally (interlockingly) with the disk-playback unit 5 by the later-described motor 41 along the direction of the arrow K, that is the direction perpendicular (intersecting) to the direction of arranging the plural CDs 2 so as to be stacked, that is the main surface of the CD 2. The disk-transporting unit 4 can move freely along the arrow K between the insert/eject position (shown in Figs. 41, 42), in which the space between the guide unit 82 and the transporting roller 13 positions in substantially same plane, in which the insertion opening 10 positions, and the escape position, in which the disk-transporting unit 4 moves from the insert/eject position close to the top plate to escape from the insert/eject position.

Thus, the disk-transporting unit 4 moves along the direction perpendicular (intersecting) to the main surface of the CD 2 between the insert/eject position and the escape position, that is in a predetermined range. The insert/eject position corresponds to the one position and the vicinity of the one end of the predetermined range. The escape position corresponds to the other position and the vicinity of the other end of the predetermined range.

At the insert/eject position, the projecting pins 86, 87 of the disk-transporting unit 4 abut on the pushing devices 80, 81, and the transporting roller 13 is moved apart from the guide unit 82. At the insert/eject position, the roller 14 and the guide unit 82 are separated from each other in a direction perpendicular (intersecting) to the main surface of the CD 2. At the insert/eject position, the CD 2 inserted between the roller 14 and the guide unit 82 abuts on an outer surface of the roller 14, and is clamped between the roller 14 and the guide unit 82, so that the disk-transporting unit 4 inserts the CD 2 into the insertion opening 10, and inserts the CD 2 into and ejects the CD 2 from the apparatus main body 3, by the roller 14 rotated by the motor 41. At the time, the transporting roller 13 transports the CD 2 and the guide unit 82 holds the CD 2 in a transport path. A position, in which the bump 82a touches the CD 2, and a position, in which the transporting roller 13 touches the CD 2, are apart from each other along the transport direction of the CD 2. The transport path means a path, through which the CD 2 is transported from the insert/eject opening 10 to a position, in which the CD 2 is received in the disk-receiving unit 6. The position, in which the CD 2 is received in the disk-receiving unit 6, corresponds to a receiving position in this specification.

When the disk-transporting unit 4 moves from the insert/eject position toward the escape position, the roller 14 and the guide unit 82 move close to each other by the energizing force of the coil spring 85, so that a total thickness of the disk-transporting unit 4 is limited.

The disk-playback unit 5 is received in the apparatus main body 3, and includes the moving chassis 16 as a support member, the swing chassis 17 and the pick-up playback unit (not shown) as the playback unit for reading out information from the CD 2, as shown in Fig. 4. The moving chassis 16 is formed into a frame shape with sheet metal. The moving chassis 16 is supported movably along a direction K (shown in an arrow in Fig. 3) of arranging (piling each) the holders 19 of the disk-receiving unit 6 by the surround plate 12 of the fixed chassis 9. The moving chassis 6 supports both the disk-transporting unit 4 and the pick-up playback unit (not shown).

The swing chassis 17 is formed into a band shape with sheet metal. The swing chassis 17 is supported rotatably around one end thereof by the moving chassis 16. The swing chassis 17 rotates around the one end thereof so as to move freely between a condition in that the other end thereof is inserted between plural CDs 2 received in the disc-receiving unit 6 and a condition in that the other end is extracted from the plural CDs 2 received in the disk-receiving unit 6.

The pick-up playback unit is mounted on a CRG chassis supported with vibration isolation through a damper or a spring by the swing chassis 17. The pick-up playback unit has a turntable and a pick-up unit. The turntable has a rotating table, a spindle motor and a plurality of clamp hooks. The rotating table is supported rotatably at the other end of the CRG chassis. The rotating table is formed into a disk shape to mount the CD 2 thereon.

The spindle motor is arranged between the other end of the CRG chassis and the rotating table. The spindle motor rotates the rotating table. The clamp hooks are provided freely to project from and retract into a surface of the rotating table. When the clamp hooks project from the surface of the rotating table, the clamp hooks project into the center hole of the CD 2 on the rotating table to clamp the CD 2 between the rotating table and the clamp hooks.

The pick-up unit has an optical pick-up 66 shown with an alternate long and two short dashes line in Fig. 4 and a pick-up moving unit. The optical pick-up 66 is supported movably in a direction to move close to and apart from the turntable by the CRG chassis. The optical pick-up 66 reads out information from the CD 2 supported on the turntable. In other words, the optical pick-up plays back the CD 2 held by the holder 19. When playing back, the CD 2 escapes from the holder 19 in the thickness direction Z. The pick-up moving unit moves the optical pick-up 66 close to and apart from the turntable.

In the disk-playback unit 5, the other end of the swing chassis 17 is inserted between the CDs 2, and the clamp hooks of the turntable clamp the CD 2, and the rotating table of the turntable rotates the CD 2. In the disk-playback unit 5, the optical pick-up 66 reads information from the CD 2 rotated by the turntable. The disk-playback unit 5 moves along the arrow K as later description. Thus, the disk-playback unit 5 moves along the arrow K and clamps the CD 2 held by the holder 19 and plays back the CD 2.

The moving mechanism 60, as shown in Fig. 4, includes a first slide chassis 61, a second slide chassis 62, a swing arm 63 and a holding chassis 92 (shown in Fig. 39). The first slide chassis 61 is made of the sheet metal, and includes a horizontal portion 64 and vertical portion 65 as an integrated one. The horizontal portion 64 is formed into a plate shape, and piled on the plate shaped bottom plate 11 of the fixed chassis 9.

The horizontal portion 64 is supported slidably along a lengthwise direction of the swing chassis 17 in a condition, which the other end portion moves out of a space between the plural CDs 2, by the bottom plate 11. The horizontal portion 64 moves along the lengthwise direction of the swing chassis 17 in the condition, which the other end portion 17b moves out of the space between the plural CDs 2, by a driving force of a later-described motor 20 of the separating mechanism 7. The vertical portion 65 extends upwardly, that is toward the second slide chassis 62, from an edge of the horizontal portion 64.

The second slide chassis 62 is formed into a plate shape. The second slide chassis 62 is arranged between the moving chassis 16 and the bottom plate 11 and piled on the moving chassis 16. The second chassis 62 is supported slidably along the lengthwise direction of the swing chassis 17 in the condition, which the other end portion 17b moves out of the space between the plural CDs 2, by the moving chassis 16.

The second slide chassis 62 is locked with the aforesaid vertical portion 65. Thereby, the second slide chassis 62 moves together with the vertical portion 65 along the lengthwise direction of the swing chassis 17 in the condition, which the other end portion 17b moves out of the space between the plural CDs 2, by the driving force of the motor 20.

The swing arm 63 is formed into a plate shape with the sheet metal. The swing arm 63 is formed into an L-shape in plan view, as shown in Fig. 4. The swing arm 63 is supported rotatably around a central portion thereof by the moving chassis 16. One end of the swing arm 63 is connected to the second slide chassis 62. The other end of the swing arm 63 is connected rotatably to the swing chassis 17. When the second slide chassis 62 slides along the aforesaid lengthwise direction, the swing arm 63 rotates around the central portion so as to swing the swing chassis 17 around the one end portion of the swing chassis 17.

The holding chassis 92 is formed into a plate shape with sheet metal. The holding chassis 92 is piled on the second slide chassis 62 and mounted on the moving chassis 16.

In the moving mechanism 60, the first slide chassis 61 and the second slide chassis 62 are moved by the driving force of the motor 20, and the swing chassis 17 is swung around the one end portion by rotating the swing arm 63. In the moving mechanism 60, by swing the swing chassis 17 around the one end portion, the optical pick-up 66, that is the disk-playback unit 5 is moved to a position to oppose an information recording surface of the CD 2 held by the holder 19.

The disk-receiving unit 6 is received in the apparatus man body 3, and includes a moving chassis 18 as a first wall and plural holders 19 as the holding member, as shown in Fig. 4. The moving chassis 18 is made of sheet metal and formed into a plate shape. The moving chassis 18 is arranged with a space in parallel to the bottom plate 11 of the fixed chassis 9. The moving chassis 18 positions the disk-playback unit 5 between the fixed chassis 9 and the bottom plate 11. The moving chassis 18 is supported movably along the arrow K by the surrounding plate 12 of the fixed chassis 9.

The holder 19 is made of synthetic resin and formed into a plate shape. The holder 19 is formed into a C-shape in plan view. The holder 19 is supported by the moving chassis 18 to be in parallel both to the bottom plate 11 and the moving chassis 18. The holders 19 are arranged to make an open side of the C-shape correspond to the insertion opening 10.

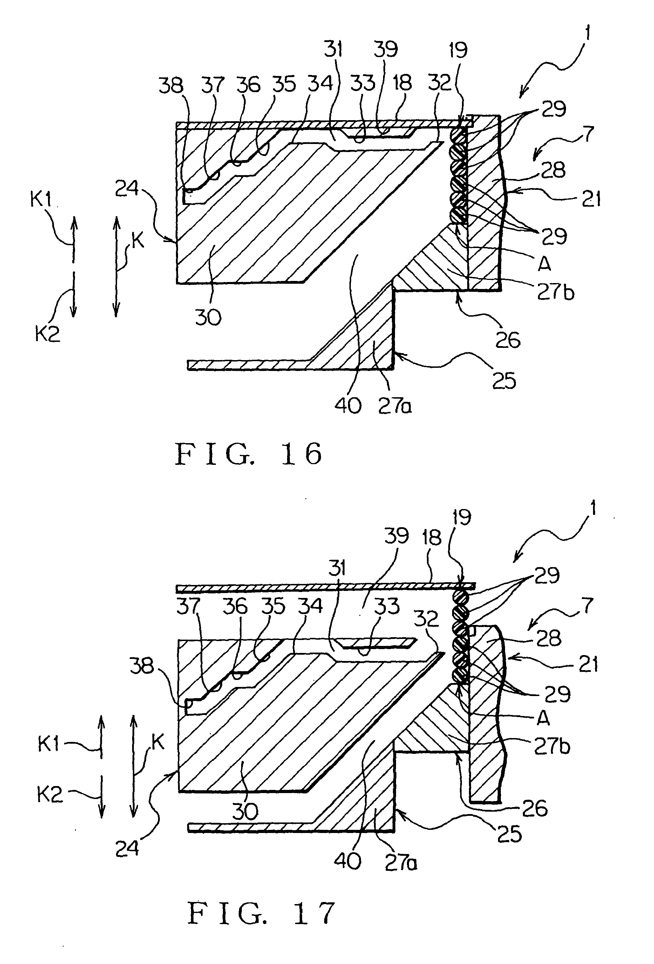

The CD 2 to be inserted through the insertion opening 10 into the apparatus main body 3 penetrates through the open side into an inside of the holder 19, thereby the CD 2 is held by the holder 19. The plural holders 19 to be piled are arranged so as to make main surfaces of the CDs 2 held by the holders 19 in parallel to each other. The holders 19 are supported movably along the aforesaid arrow K by the moving chassis 18. The holders 19 are respectively provided with a projection 29 (shown in Figs. 16-22) projecting outwardly. The disk-receiving unit 6 receives plural holders 19 allowable to hold the CD 2 by piling the holders 19.

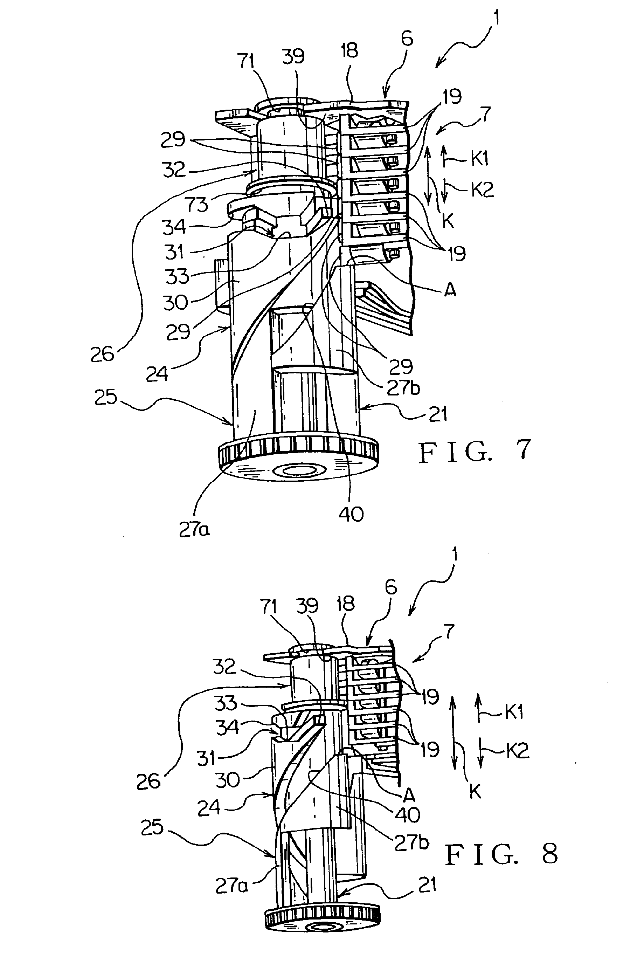

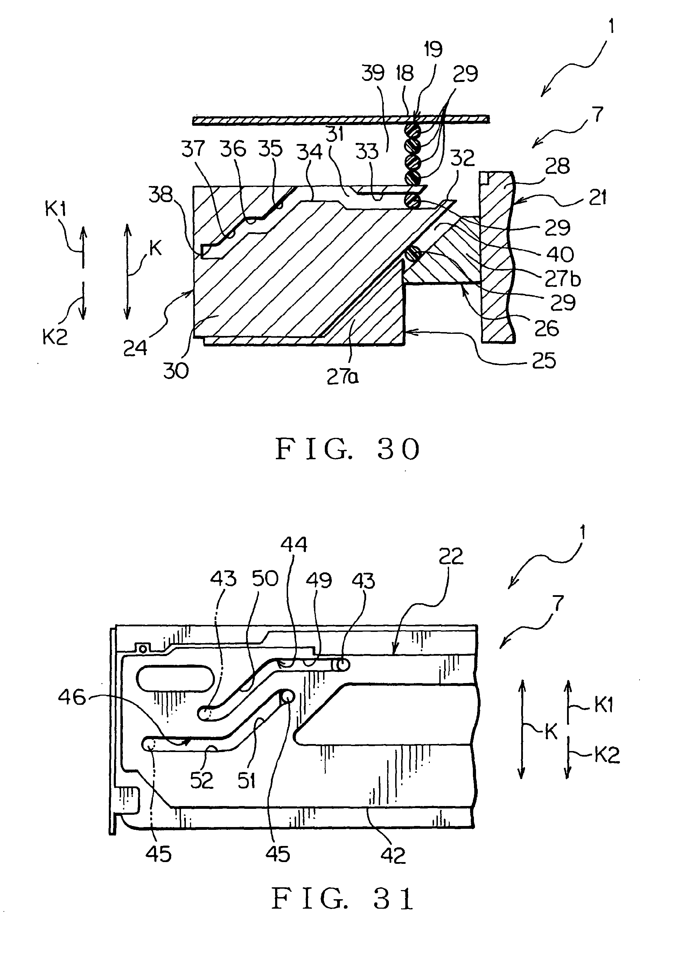

The separating mechanism 7 is received in the apparatus main body 3, and includes the motor 20 (shown in Fig. 4), a separated-groove expand/shrink mechanism 21 (shown in Figs. 7-11), and an interlocking moving mechanism 22 (shown in Figs. 31-38). The motor 20 is fixed on the fixed chassis 9 as shown in Fig. 4.

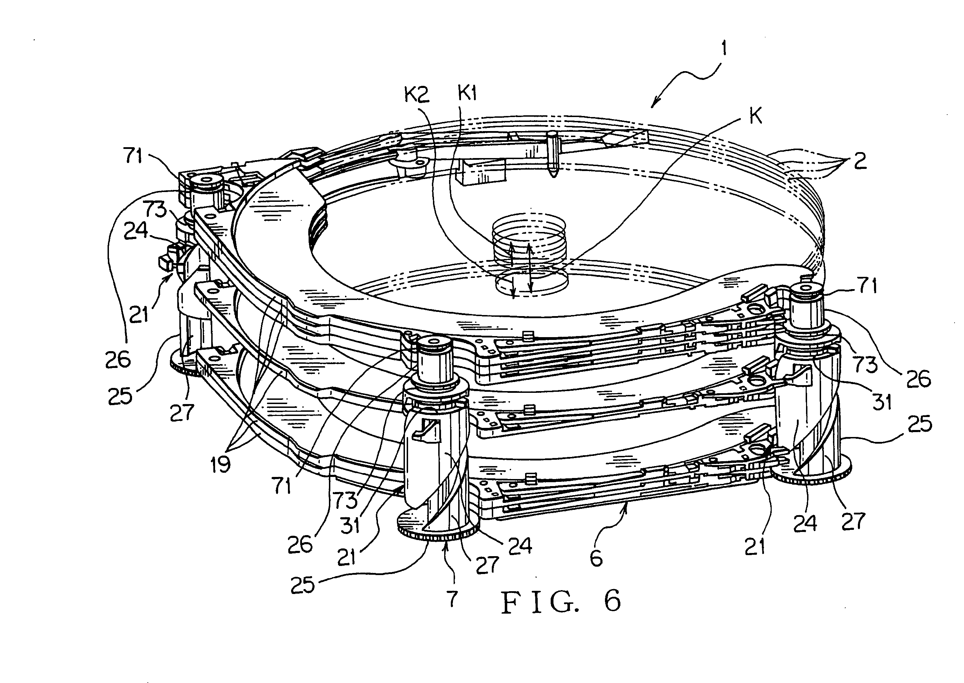

Tree separated-groove expand/shrink mechanisms 21 are provided in corners of the apparatus main body 3 as shown in Fig. 6. The separated-groove expand/shrink mechanism 21 is formed into a cylindrical shape as shown in Figs. 7-15, and includes a rotating member 25, a moving member 26 and a cam member 26.

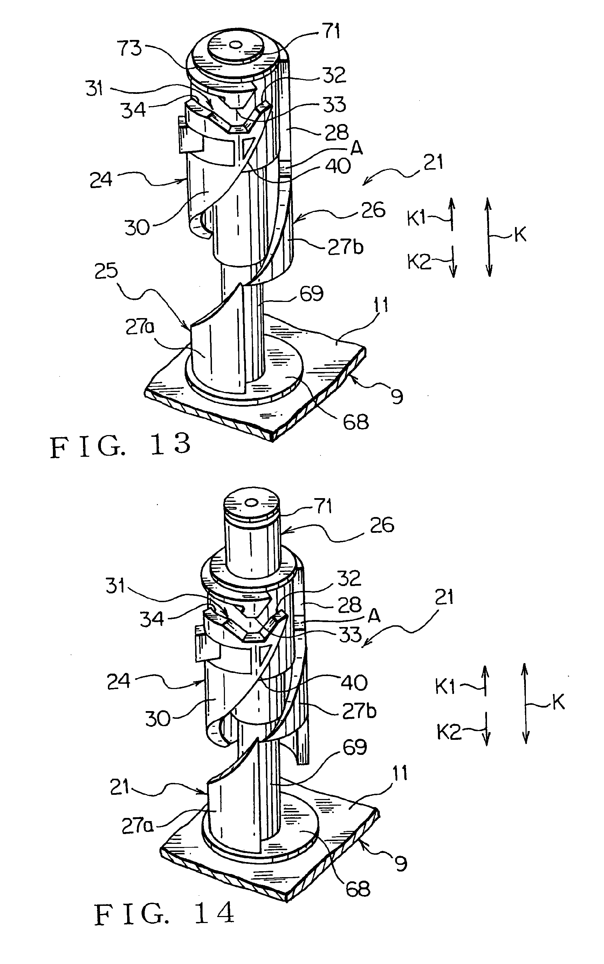

The rotating member 25 has integrally a disk portion 68 and a cylindrical portion 69 arranged coaxially to each other, as shown in Figs. 13-15. The disk portion 68 formed into a disk shape is supported rotatably around its axis by the bottom plate 11 of the fixed chassis 9. The cylindrical portion 69 formed into a cylindrical shape extends vertically from the disk portion 68.

An axis of the rotating member 25 is aligned in parallel to the arrow K. The rotating member 25 is engaged at gear teeth provided around an outer edge of the disk portion 68 with plural gears 67 arranged rotatably at the bottom plate 11. The rotating member 25 is rotated around its axis through a cam 67a on a cam 67b connected through the gear 67 with a pinion of the motor 20 by the driving force of the motor 20. "the rotating member 25 is rotated around its axis by the driving force of the motor 20" corresponds to "the rotating member 25 is moved by the driving force of the motor 20" in this specification. In the rotating member 25, the moving portion 26 and cam member 24 are respectively arranged coaxially and rotated respectively.

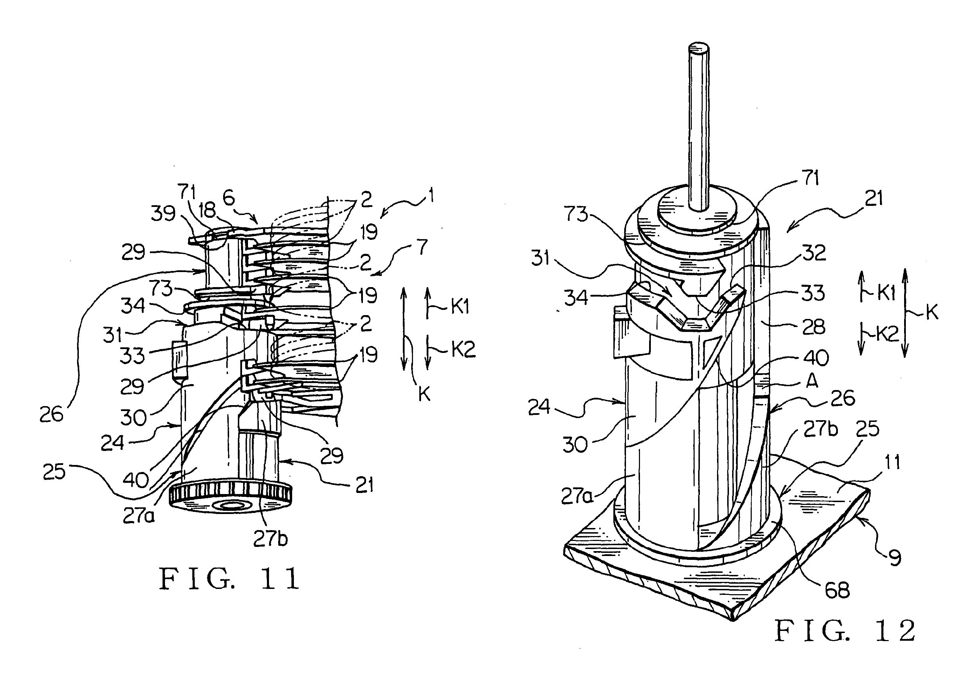

The moving member 26 is formed into a cylindrical tube shape as shown in Figs. 12-15, and arranged around an outer wall of the rotating member 25 coaxially with the rotating member 25. The moving member 26 and the rotating member 25 are connected to each other with a key unit structured by a projection 70 provided at the rotating member 25 and a key way provided at the moving member 26.

The moving member 26 is assembled movably along the arrow K with the rotating member 25. The moving member 26 can move along the arrow K independently of the cam member 24. At an edge (top end), far from the bottom plate 11, of the moving member 26, a lock groove 71 is provided. The moving member 26 and the rotating member 25 rotate integrally (interlockingly) around the axis.

The moving member 26 is assembled with the moving chassis 18 as the first wall, as shown in Figs. 7, 16-30, and provided with a second wall 27b. The moving chassis 18 and the second wall 27b are arranged at both ends, in an axis direction, of the moving member 26, always with a constant space to each other along the axis in parallel to the arrow K. The moving chassis 18 and the second wall 27b project in a radial direction from the both ends of the moving member 26.

The moving member 26 is assembled with the moving chassis 18 at the lock groove 71 provided at the end, far from the bottom plate 11 of the fixed chassis 9. In the present invention, such structure is described by "the moving chassis 18 as the first wall is arranged at the top of the moving member 26". According to the structure, the moving member 26 moves integrally (interlockingly) with the moving chassis 18 along the arrow K. The moving chassis 18 allows (does not prevent) the moving member 26 to rotate around its axis. The moving chassis 18 is formed into a plate shape along a direction perpendicular to the arrow K.

The second walls 27a, 27b are provided from the rotating member 25 to the moving member 26. In the rotating member 25, as shown in Figs. 12-15, the second wall 27a extends vertically from an outer edge of the disk portion 68 so as to be formed with an arc shape cross-section around the axis of the rotating member 25. Thus, the second wall 27a is arranged around the disk portion 68.

In the moving member 26, the second wall 27b is arranged at an edge close to the bottom plate 11 of the fixed chassis 9 (bottom end of the moving member 26), as shown in Figs. 12-15. The second wall 27b is provided around the moving member 26 and coaxially with the moving member 26. The second walls 27a, 27b are formed from the rotating member 25 to the moving member 26 within the same surface. The second walls 27a, 27b extend in a direction intersecting to both the arrow K and the direction perpendicular to the arrow K to be gradually apart from the moving chassis 18 according to a position going from the moving member 26 toward the rotating member 25.

At a position where a later-described wedge 30 of the cam member 24 is not positioned in a space between the moving chassis 18 and the second walls 27a, 27b along the arrow K, a distance between the moving chassis 18 and the second walls 27a, 27b is equal or substantially equal to a product of multiplying a number of the holder 19 and a groove width along the arrow K, of the projection 29.

The rotating member 25 and the moving member 26 positions the projection 29 between the moving chassis 18 and the second walls 17a, 17b to hold the holder 19. The rotating member 25 and the moving member 26 rotate around the axis to allow the projection 29 to move along a direction intersecting the arrow K to move close to and apart from the later-described connecting wall 28 between the moving chassis 18 and the second walls 27a, 27b.

The cam member 24, the rotating member 25 and the moving member 26 are moved by the driving force of the motor 20 to insert the projection 29 toward a deep area of a later-described separated grooves 39, 40 in a direction of that the projection 29 penetrates. Furthermore, in a later-described holder receiving position, the cam member 24, the rotating member 25 and the moving member 26 position the projections 29 of all holders 19 between the moving chassis 18 and the second walls 27a, 27b.

The cam member 24 is formed into a cylindrical tube shape, and arranged around an outer wall of the moving member 26 and coaxially with the rotating member 25 and moving member 26, as shown in Figs. 12-15. The cam member 24 and the moving member 26 are connected to each other with a key formed by a projection 72 provided at the cam member 24 and a projection provided at the moving member 26. The cam member 24 is mounted movably along the arrow K on the moving member 26. The cam member 24 rotates around the axis as an integrated one (interlockingly) with the rotating member 25 and the moving member 26.

The cam member 24 is provided at its end far from the bottom plate 11 with a lock groove 73. The moving chassis 16 of the disk-playback unit 5 is engaged with the lock groove 73 of the cam member 24. Thereby, the cam member 24 moves along the arrow K integrally (interlockingly) with the moving chassis 16, that is the optical pick-up 66. Thus, the cam member 24 can move along the arrow K. The moving chassis 16 allows (does not prevent) the cam member 24 to rotate around the axis.

The cam member 24 includes the wedge 30, a guide groove 31 and the connecting wall 28. The wedge 30 is positioned between the moving chassis 18 and the second wall 27 to have a space between the connecting wall 28. Thereby, the wedge 30 of the cam member 24 moves between the moving chassis 18 and the second wall 27 along the arrow K. The wedge 30 is formed to make its width along the arrow K narrower gradually toward the moving member 26.

The guide groove 31 is provided at the wedge 30. The guide groove 31 is formed on an outer surface of the wedge 30 of the cam member 24. Thus, the guide groove 31 is formed to recess from the outer surface of the wedge 30 of the cam member 24. A width of the guide groove 31 along the arrow K is substantially equal to a width of one projection 29 along the arrow K.

As shown in Figs. 16-30, the guide groove 31 includes an opening 32 corresponding to the connecting wall 28, a loading portion 33, a pick-up-inserting portion 34, a first connecting portion 35, a clamp portion 36, a second connecting portion 37 and a playback portion 38. The loading portion 33, the pick-up-inserting portion 34, the clamp portion 36 and the playback portion 38 extend along the direction perpendicular to the arrow K. The first connecting portion 35 and the second connecting portion 37 extend in the direction intersecting both along the arrow K and the direction perpendicular to the arrow K.

The loading portion 33 is continued to the opening 32 and located at a far side from the connecting wall 28 of the opening 32. The pick-up-inserting portion 34 is continued to the loading portion 33 and located at a far side from the connecting wall 28 of the loading portion 33. The pick-up-inserting portion 34 is located at a far from the second wall 27a of the rotating member 25.

The first connecting portion 35 is continued to the pick-up-inserting portion 34, and located at a far side from the connecting wall 28 of the pick-up-inserting portion 34. The first connecting portion 35 extends gradually toward the second wall 27a of the rotating member 25 in accordance with separating from the pick-up-inserting portion 34. The clamp portion 36 is continued to the first connecting portion 35 and located at a far side from the connecting wall 28 of the first connecting portion 35.

The second connecting portion 37 is continued to the clamp portion 36, and located at a far side from the connecting wall 28 of the clamp portion 36. The second connecting portion 37 extends gradually toward the second wall 27a of the rotating member 25 in accordance with separating from the clamp portion 36. The playback portion 38 is continued to the second connecting portion 37 and located at a far side from the connecting wall 28 of the second connecting portion 37.

The guide groove 31 allows the projection 29 to penetrate through the opening 32. In other words, the projection 29, that is the holder 19 can slide in the guide groove 31. Furthermore, the guide groove 31 allows the projection 29 to move in order into loading portion 33, the pick-up-inserting portion 34, the first connecting portion 35, the clamp portion 36, the second connecting portion 37 and the playback portion 38.

The holder 19 having the projection 29, which is positioned in the loading portion 33, corresponds to the insertion opening 10 along the arrow Y. The holder 19 having the projection 29, which is positioned in the loading portion 33, can hold the CD 2 inserted through the insertion opening 10, and eject the CD 2 held through the insertion opening 10 to an outside of the apparatus main body 3.

The holder 19 having the projection 29, which is positioned in the pick-up-inserting portion 34, moves apart from the other holder 19 positioned at a lower side in Fig. 3, and allows the other end of the swing chassis 17, that is the pick-up playback unit, to penetrate between the holder 19 at a lower side in Fig. 3. The holder 19 having the projection 29 positioned in the clamp portion 36 allows the CD 2 held by itself to be clamped by the turntable of the disk-playback unit 5. The holder 19 having the projection 29, which is positioned in the playback portion 38, is moved apart from the CD 2 clamped on the turntable so as not to interfere (touch) with the CD 2 to be rotated by the turntable, that is to allow the CD 2 to rotate.

The connecting wall 28 extends linearly along the arrow K. The connecting wall 28 corresponds to the opening 32 of the guide groove 31 provided at the wedge 30 with a space along the direction perpendicular to the arrow K. The connecting wall 28 connects the moving chassis 18 and the second wall 27 to each other.

Thus, the cam member 24 has the guide groove 31 engaged slidably with the projection 29 of the holder 19 holding one CD 2.

The rotating member 25 structured as mentioned above, the moving member 26 and the cam member 24 are arranged coaxially to each other as shown in Fig. 12. The moving member 26 and the cam member 24 can move independently of each other along the arrow K.

A space between the moving chassis 18 and the wedge 30 of the cam member 24 corresponds to a first separated groove 39 described in the present specification. The first separated groove 39 is formed by the moving chassis 18 and a top surface far from the bottom plate 11 of the wedge 30 of the cam member 24. The first separated groove 39 engages with the other holder 19 positioning above (in a direction of an arrow K1) the holder 19 holding one CD 2 and engaging with the guide groove 31.

A space between the second wall 27 and the wedge 30 of the slide member 24 corresponds to a second separated groove 40 described in the present specification. The second separated groove 40 is formed by the second wall 27 and a bottom surface close to the bottom plate 11 of the wedge 30 of the cam member 24. The second separated groove 40 engages with the other holder 19 positioning below (in a direction of an arrow K2) the holder 19 holding one CD 2 and engaging with the guide groove 31.

The first separated groove 39 and the second separated groove 40 allow the projection 29 of the holder 19 other than the holder 19 holding one CD 2 and engaging with the guide groove 31 to penetrate therein (the other holder 19 engages therewith) . The first separated groove 39 and the second separated groove 40 corresponds to the separated groove described in the present specification. The first separated groove 39 and the second separated groove 40, that is separated groove, is engaged slidably with the holder 19 other than the holder 19 holding one CD 2 and engaging with the guide groove 31, and formed by relative motion of the cam member 24 and the moving member 26.

Widths along the arrow K of the first separated groove 39 and the second separated groove 40 are changed (expanded or shrunken) interlockingly therewith by moving relatively the slide member 24 and the moving member along the arrow K. When the cam member 24 slides along the arrow K, if the width of the first separated groove 39 is expanded, the width of the second separated groove 40 is shrunken. If the width of the second separated groove 40 is expanded, the width of the first separated groove 39 is shrunken.

Total width of the first separated groove 39 and the second separated groove 40 is equal or substantially equal to a product of multiplying a number by subtracting one from the number of the holders 19 by the width along the arrow K of the projection 29. The width along the arrow K of the first and second separated grooves 39, 40, that is the separated groove, is changed by the relative motion of the cam member 24 and the moving member 26. Thus, the width along the arrow K of the first and second separated grooves 39, 40 is relatively changed by the relative motion of the cam member 24 and the moving member 26.

According to the above structure, one of projections 29 of all holders 19 positioned between the moving chassis 18 and the second wall 27 penetrates into the guide groove 31 by that the rotating member 25, the moving member 26 and the cam member 24 rotate (move) as an integrated one (interlockingly) by the driving force of the motor 20 transmitted through the plural gears 67.

Projections 29 of the holders 19, which are other than above holder 19 and located toward the arrow K1 (shown in Fig. 7) from the above one projection 29 inserting in the guide groove 31, penetrate into the first separated groove 39. Projections 29 of the holders 19, which are other than above holder 19 and located toward the arrow K2 (shown in Fig. 7) from the above one projection 29 inserting in the guide groove 31, penetrate into the second separated groove 40. The arrow K1 is one direction of the arrow K and the arrow K2 is the other direction of the arrow K.

A position, in which the projection 29 of the holder 19 is located between the moving chassis 18 and the second wall 27 by approaching the connecting wall 28 not to penetrate in the guide groove 31, is called as a holder receiving position. Since the wedge 30 of the cam member 24 is spaced from the connecting wall 28, the first separated groove 39 and the second separated groove 40 become to the integrated one in the holder receiving position. In the holder receiving position, plural holders 19 move close to each other.

A position, in which the projection 29 of the holder 19 penetrates into the playback portion 38 of the guide groove 31 and deep areas of the first and second separated grooves 39, 40, is called as a playback position, in which the holder 19 positions. In the playback position, the holder 19, the projection 29 of which penetrates in the guide groove 31, is moved apart from the holder receiving position more than the other holders 19 by the wedge 30 of the cam member 24. In the playback position, the holders 19, which holds the CD 2 to be played back, moves apart from the other holders 19, and the optical pick-up 66 can penetrate between the holder 19, which holds the CD 2 to be played back, and the other holder 19.

A position, in which the projection 29 is located between the second wall 27b of the moving member 26 and the moving chassis 18 so as to penetrate in the loading portion 33 of the guide groove 31 and the first and second separated grooves 39, 40, is called as a loading position, in which the holder 19 positions, in the present specification.

In the playback position, the projection 29 of the holder 19 toward the arrow K1 from the holder 19, which holds the CD 2 to be played back, penetrates in the first separated groove 39. The first separated groove 39 moves the holder 19 toward the arrow K1 from the holder 19, which holds the CD 2 to be played back.

In the playback position and the loading position, the projection 29 of the holder 19 toward the arrow K2 from the holder 19, which holds the CD 2 to be played back, penetrates in the second separated groove 40. The second separated groove 40 moves the holder 19 toward the arrow K2 from the holder 19, which holds the CD 2 to be played back.

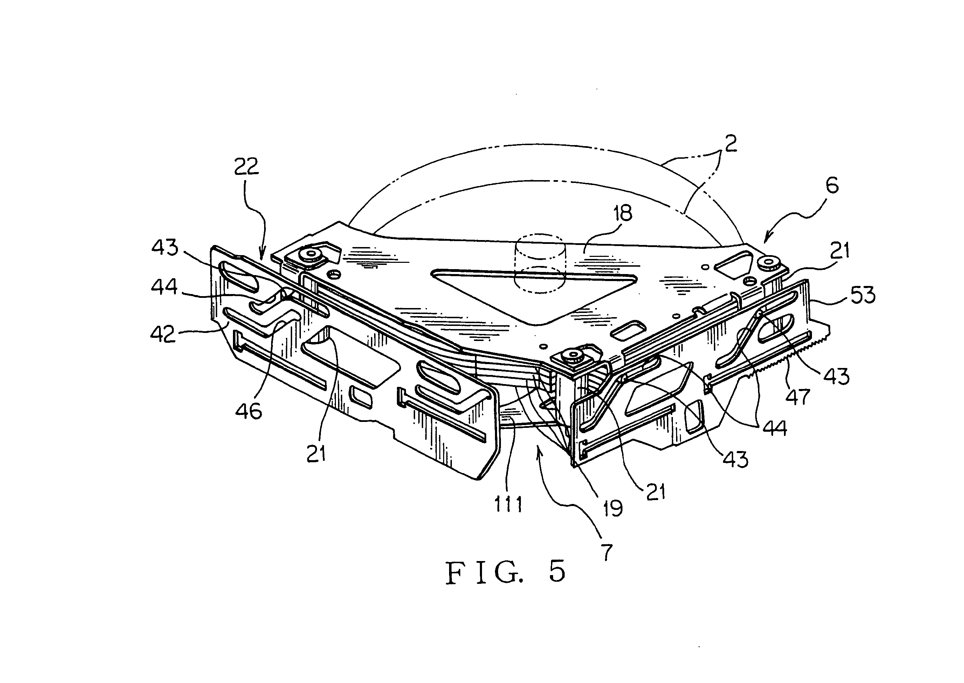

The interlocking moving mechanism 22 includes the motor 41 (shown in Fig. 4) as a drive source, a drive chassis 42 (shown in Figs. 4, 5), a second drive chassis 53 (shown in Figs. 4, 5), a first projection 43, a first hole 44, a second projection 45 and a second hole 46. In Fig. 4, two drive chassis 42 and two later-described second drive chassis 53 are shown. Actually, one drive chassis 42 and one second drive chassis 53 are provided.

When the holder 19 of the disk receiving unit 6 is moved between the holder receiving position and the playback position, the interlocking moving mechanism 22 moves the second moving member 26 along the arrow K against the rotating member 25 to be most apart form the member body 25. Then, the interlocking moving mechanism 22 positions the cam member 24 in a position, in which the projection 29 of the holder 19 holding the CD 2 to be positioned in the playback position can penetrate in the guide groove 31.

When the holder 19 of the disk receiving unit 6 is moved between the playback position and the loading position, that is the CD 2 is inserted in or ejected from the apparatus main body 3, the interlocking moving mechanism 22 moves the cam member 24 along the arrow K against the moving member 26 to be most close to the rotating member 25. Then, the interlocking moving mechanism 22 positions the moving member 26 in a position, in which the projection 29 of the holder 19 holding the CD 2 to be positioned in the loading position, chat is to be inserted or ejected, can penetrate in the guide groove 31. The interlocking moving mechanism 22 moves interlockingly the cam member 24, that is the moving chassis 16 of the disk playback unit 5, and the moving member 26, that is the moving chassis 18 of the disk receiving unit 6, along the arrow K.

The motor 41 is mounted on the bottom plate 11 of the fixed chassis 9. The drive chassis 42 is formed into a plate shape with the sheet metal. The drive chassis 42 is formed into a rectangular shape in plan view. The drive chassis 42 is supported movably along the direction perpendicular (intersecting) to the arrow K by the surrounding plate 12 of the fixed chassis 9 in the apparatus main body 3.

The second drive chassis 53 is formed into a plate shape with sheet metal. The second drive chassis 53 is formed into a rectangular shape in plan view. The second drive chassis 53 is supported movably along the direction perpendicular to the arrow K by the surround plate 12 of the fixing chassis 9 of the apparatus main body 3. In the second drive chassis 53, a rack 47 engaging with a gear 48 rotated by the drive force of the motor 41 is formed.

The first projection 43 projects from the moving chassis 18 of the disk receiving unit 6 toward the second drive chassis 53. The first hole 44 is provided each at the drive chassis 42 and the second drive chassis 53. The first hole 44 pieces through the drive chassis 42 and the second drive chassis 53. The first projection 43 penetrates in the first hole 44.

The first hole 44 includes a first parallel portion 49 and a first slant portion 50 as shown in Figs. 31-38. The first parallel portion 49 extends linearly along the direction perpendicular to the arrow K. The first slant portion 50 is continued to an end of the first parallel portion 49, and extends linearly along a direction intersecting both the arrow K and the direction perpendicular to the arrow K. The first slant portion 50 slants so as to be gradually close to the bottom plate 11 of the fixed chassis 9 in accordance with separating from the first parallel portion 49.

The second projection 45 projects from the moving chassis 16 of the disk playback unit 5 toward the drive chassis 42. The second hole 46 is provided at the drive chassis 42. The second hole 46 pieces through the drive chassis 42. The second projection 45 penetrates in the second hole 46.

The second hole 46 includes a second slant portion 51 and a second parallel portion 52. The second slant portion 51 extends linearly along a direction intersecting both the arrow K and the direction perpendicular to the arrow K. The second slant portion 51 slants so as to be gradually apart from the bottom plate 11 of the fixed chassis 9 in accordance with separating from the second parallel portion 52. The second slant portion 51 is in parallel to the first slant portion 50. The second parallel portion 52 is continued to an end of the second slant portion 51, and extends linearly along the direction perpendicular to the arrow K.

When the first projection 43 is positioned in the first slant portion 50, the second projection 45 is positioned in the second parallel portion 52. When the first projection 43 is positioned in the first parallel portion 49, the second projection 45 is positioned in the second slant portion 51.

By the driving force of the motor 41 as the drive source, the interlocking moving mechanism 22 moves the second drive chassis 53 along the direction perpendicular to the arrow K. Interlocking the motion of the second drive chassis 53, the drive chassis 42 connected with the second drive chassis 53 by a link arm 111 shown in Fig. 4 moves along the direction perpendicular to the arrow K.

Therefore, the interlocking moving mechanism 22, that is the separating mechanism 7 includes the motor 41 as single drive source for driving (moving) respectively the cam member 24 and the moving member 26 along the arrow K.

When the holder 19 is positioned in the loading position by the motor 41 as the drive source, that is the CD 2 is inserted in or ejected from the apparatus main body 3, the interlocking moving mechanism 22 positions the drive chassis 42 in a position, in which the second projection 45 moves in the second parallel portion 52, and the first projection 43 moves in the first slant portion 50. When the holder 19 is moved between the playback position and the receiving position by the driving force of the motor 41 as the drive source, the interlocking moving mechanism 22 positions the drive chassis 42 in a position, in which the second projection 45 moves in the second slant portion 51, and the first projection 43 moves in the first parallel portion 49.

When the second projection 45 is positioned in the second parallel portion 52 by the interlocking moving mechanism 22, the cam member 24 most approaches the second wall 27 of the rotating member 25. The holder 19, the projection 29 of which is positioned in the loading portion 33 of the guide groove 31 of the cam member 24 closest to the second wall 27 of the member body 25, is positioned in a position, in which the CD 2 inserted/ejected through the insertion opening 10 can be held.

When information of any one CD 2 selected by the operation panel from among the plural CDs 2 received in the apparatus main body 3 is read out, the CD changer 1 as structured above makes the projections 29 of all holders 19 position on a horizontal portion A of the second wall 27b by the driving force of the motor 20 as shown in Fig. 16.

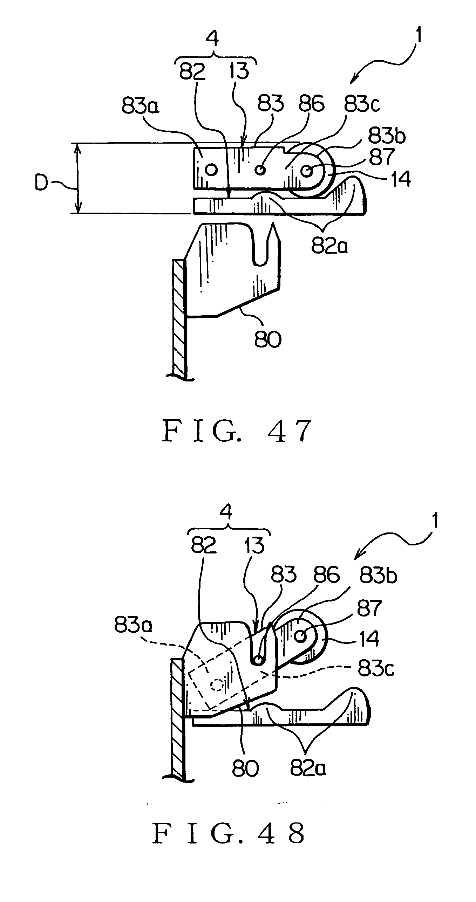

Furthermore, the disk-transporting unit 4 is moved from the insert/eject position toward the top plate, and positioned in the playback position by the driving force of the motor 41. Then, the pushing devices 80, 81 do not touch the projections 86, 87, as shown in Figs. 45, 47. The roller 14 approaches to the guide member 82 by the energizing force of the coil spring 85, as shown in Fig. 43. The other end of the swing chassis 17, that is the turntable and the pick-up playback unit, is escaped from a space between the plural CDs 2.

As shown in Fig. 31, the drive chassis 42 is positioned in a position, in which the first projection 43 is positioned in the first parallel portion 49 of the first hole 44, by the driving force of the motor 41 as the drive source. Furthermore, as shown in Fig. 16, the moving chassis 18 is located farthest from the second wall 27a of the rotating member 25.

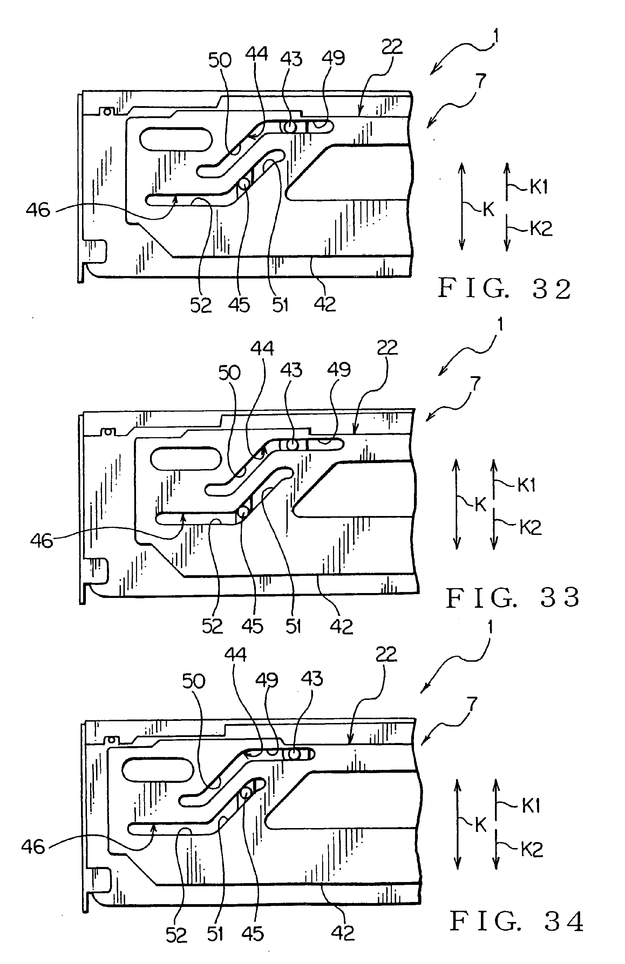

The second projection 45 is moved in the second slant portion 51 of the second hole 46 by the driving force of the motor 41 as the drive source, and the drive chassis 42 is positioned in a position, in which the projection 29 of the holder 19 holding any one CD 2 selected to be read out corresponds the guide groove 31 along the direction perpendicular to the arrow K, by the driving force of the motor 41 as the second drive source, as shown in Fig. 32. As shown in Figs. 8, 17, the opening 32 of the guide groove 31 of the cam member 24 is corresponded, along the direction perpendicular to the arrow K, to the projection 29 of the holder 19 holding the selected any one CD 2 in which the information is read out. In Figs. 8, 17, the projection 29 of the holder 19 fourth from the topside is corresponded to the guide groove 31 provided in the cam member 24.

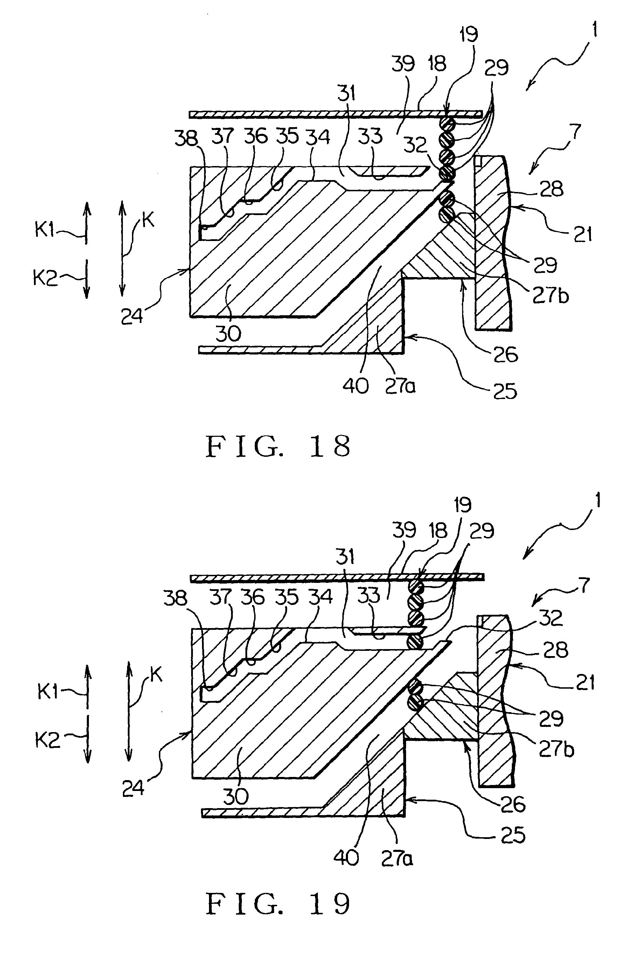

The rotating member 25, the moving member 26 and the cam member 24 are rotated as an integrated one by the driving force of the motor 20. Then, the projections 29 of all holders 19 move gradually apart from the connecting wall 28. Thereby, as shown in Fig. 18, the projection 29 of the holder 19 holding any one CD 2 selected to be read out penetrates in the opening 32 of the guide groove 31. Furthermore, the projection 29 of the holder 19 holding the other CD 2 touches the wedge 30 of the cam member 24 and moves in the first and second separated grooves 39, 40 by the wedge 30.

When the rotating member 25, the moving member 26 and the cam member 24 are rotated as an integrated one by the driving force of the motor 20, the projection 29 of the holder 19 holding the any one CD 2 selected to be read out is positioned in the loading portion 33 as shown in Fig. 19. The aforesaid one CD 2, the other CDs 2 the toward the arrow K1 from the one CD 2 and the other CDs 2 the toward the arrow K2 from the one CD 2 move gradually from each other.

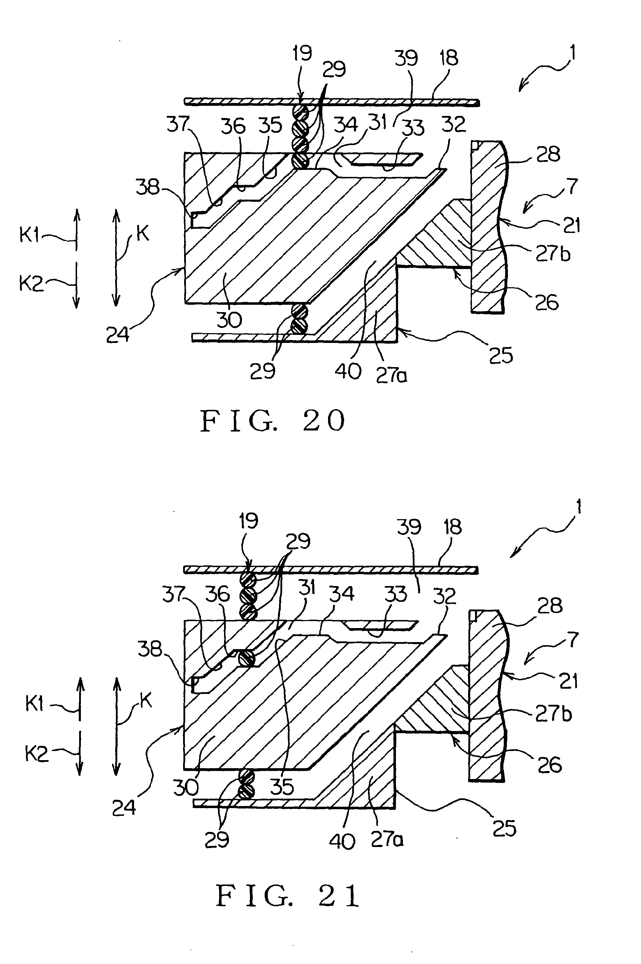

Thereafter, the projection 29 of the holder 19 holding the one CD 2 is positioned in the pick-up insert portion 34 of the guide groove 31 as shown in Fig. 20. In this condition, the swing chassis 17 rotates around the one end portion, and the other end portion, that is the turntable and the pick-up playback unit, penetrates in a space between the one CD 2 and the other CD 2.

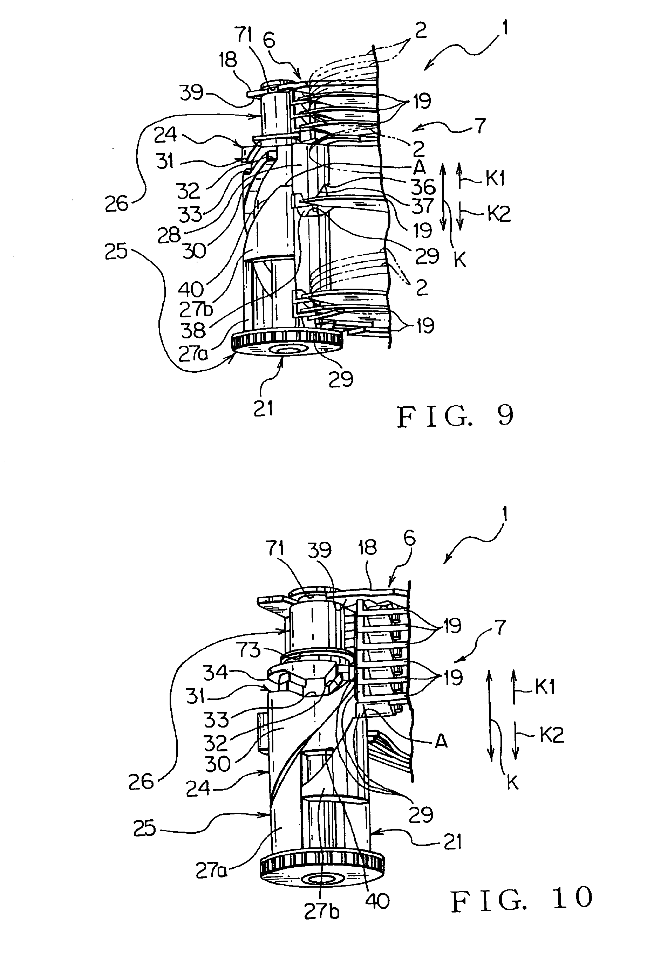

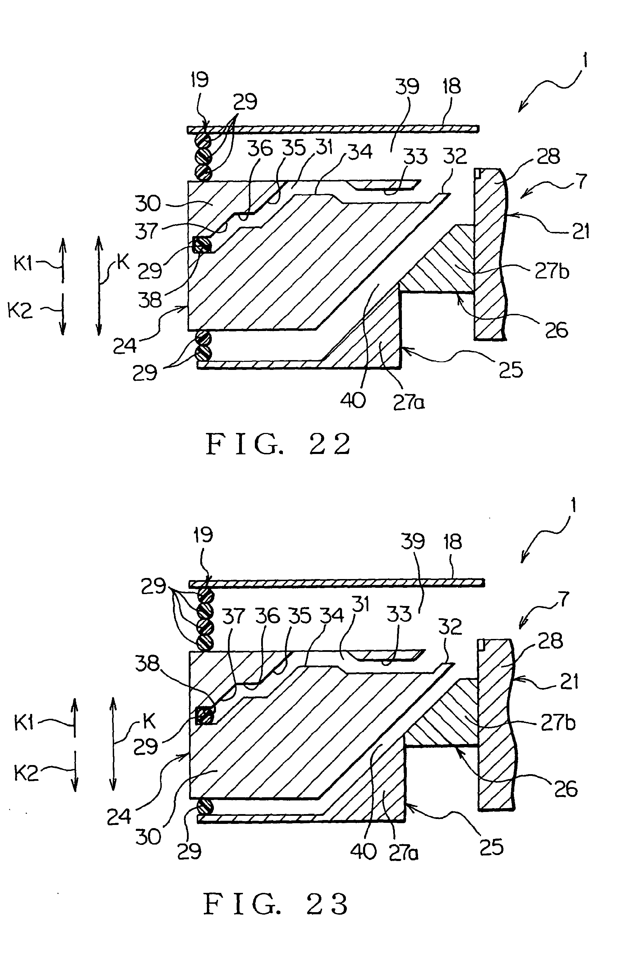

Then, the projection 29 of the holder 19 holding the one CD 2 moves in the first connecting portion 35, and is positioned in the clamp portion 36 as shown in Fig. 21. In the condition, the turntable of the disk-playback unit 5 clamps the aforesaid one CD 2. The projection 29 of the holder 19 holding the one CD 2 moves in the second connecting portion 37 and is positioned in the playback portion 38 as shown in Figs. 9, 22.

Furthermore, the projections 29 of the holder 19 holding the CD 2 located toward the arrow K1 from the one CD 2 is moved to a deep side of the first separated groove 39, that is a side apart from the connecting wall 28 by the wedge 30 of the cam member 24. Furthermore, the projections 29 of the holder 19 holding the CD 2 located toward the arrow K2 from the one CD 2 is moved to a deep side of the second separated groove 40, that is a side apart from the connecting wall 28 by the wedge 30 of the cam member 24.

Then, as shown in Figs. 9, 22, the holder 19 holding the one CD 2 is positioned by the guide groove 31 provided at the wedge 30 of the cam member 24. Thereafter, the holder 19 holding the one CD 2 is separated from the other holders 19 by the wedge 30 of the cam member 24 and the moving chassis 18 and the second wall 27, that is the first and second separated grooves 39, 40. Then, the other holders 19 are positioned by the first and second separated grooves 39, 40.

When the projection 29 of the holder 19 holding the one CD 2 is positioned in the playback portion 38, the holder 19 is moved apart from the CD 2 clamped by the turntable of the disk-playback unit 5. Thus, it is prevented that the holder 19 interferes with rotation of the CD 2. The turntable rotates the CD 2 to be clamped thereon, and the optical pick-up 66 of the pick-up playback unit reads out information from a required area of the CD 2. When reading out information from the one CD 2 is stopped, the rotating member 25 and the moving member 26 and the cam member 24 are rotated oppositely against the above direction by the driving force of the motor 20.

Thus, by moving the cam member 24 along the arrow K, and expanding or shrinking the width of the first separated groove 39 and the width of the second separated groove 40 interlockingly, the separating mechanism 7 positions the holder 19 holding the required CD 2 and separates the holder 19 from the other holders 19. Thus, the separating mechanism 7 separates the holder 19 holding the one CD 2 from the other holder 19 along the arrow K.

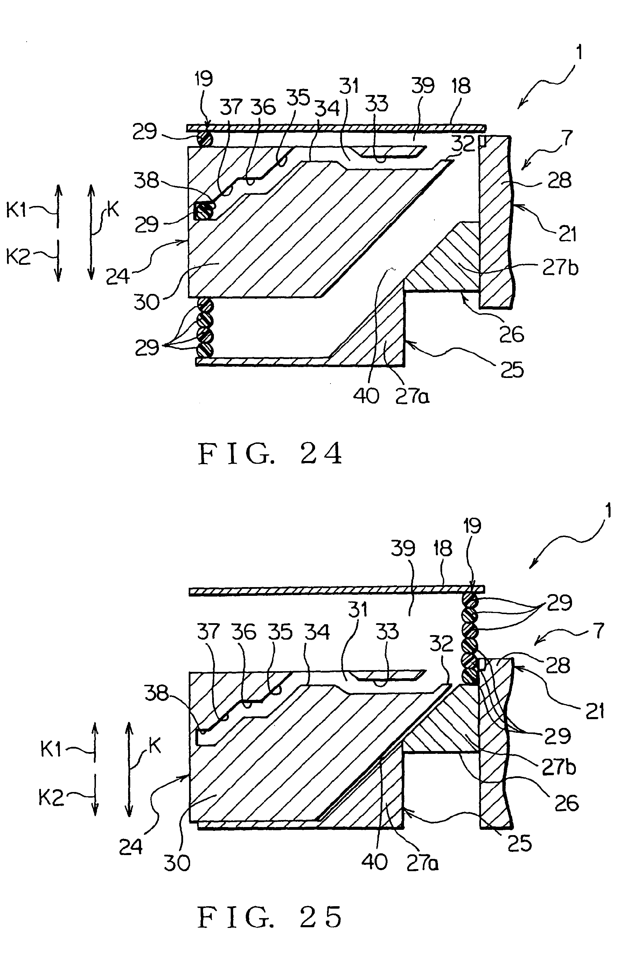

When the holder 19 holding the CD 2 second from the bottom in Fig. 23 is positioned in the playback position as shown in Fig. 23, or When the holder 19 holding the CD 2 second from the top in Fig. 24 is positioned in the playback position as shown in Fig. 24, the action processes is the same. In conditions shown in Figs. 23, 24, the first projection 43 is positioned in the first parallel portion 49, and the second projection 45 is positioned in the second slant portion 51 as shown in Figs. 33, 34.

When the any one CD 2 selected from among the plural CDs 2 received in the apparatus main body 3 is ejected out of the apparatus main body 3 or the CD 2 is inserted into the apparatus main body 3 and held in the selected any one holder 19 by a command through the operation panel, the CD changer 1 as structured above positions the projections 29 of all holders 19 on the horizontal portion A of the second wall 27b by the driving force of the motor 20, as shown in Figs. 7, 10 and 25. Furthermore, the CD changer 1 makes the other end portion of the swing chassis 17 of the disk-playback unit 5, that is the turntable and the pick-up playback unit, escape from a space between the plural CDs 2.

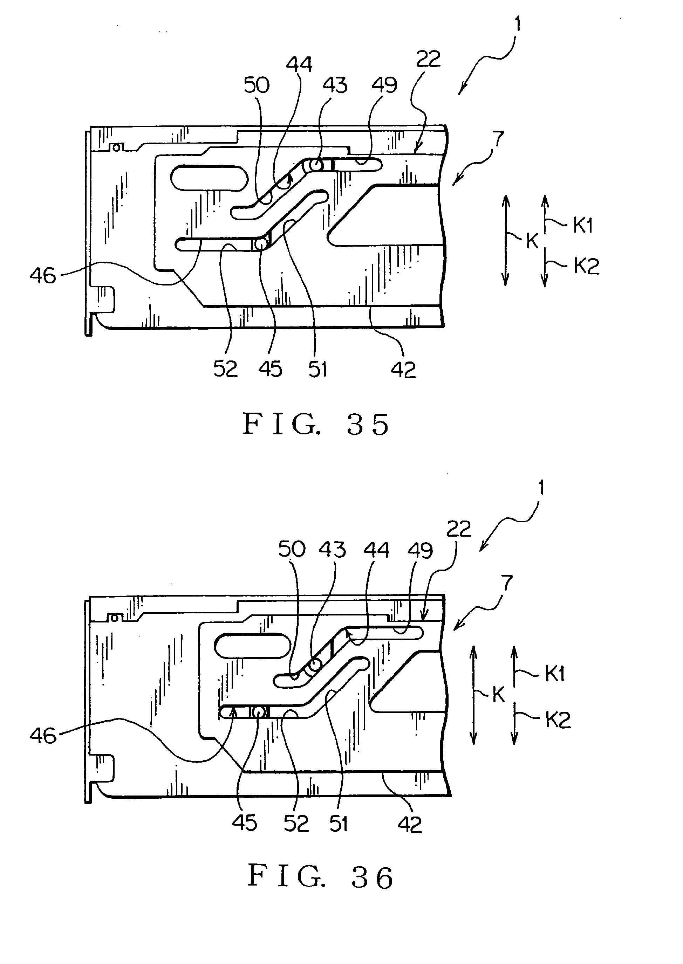

The CD changer 1 also positions the drive chassis 42 in a position, in which the second projection 45 is in the second parallel portion 52 of the second hole 46, by the driving force of the motor 41 as the second drive source as shown in Fig. 35. Furthermore, the CD changer 1 positions the disk-transporting unit 4 in the insert/eject position by the driving force of the motor 41. Thereby, the one pushing device 80 abuts on the projecting pin 86, that is the transporting roller 13, and pushes the projecting pin 86, that is the transporting roller 13 to move the roller 14 apart from the guide member 82, as shown in Fig. 48.

The other pushing device 81 abuts on the projecting pin 87, that is the transporting roller 13, and pushes the projecting pin 87, that is the transporting roller 13 to move the roller 14 apart from the guide member 82, as shown in Fig. 46. The roller 14 of the transporting roller 13 moves apart from the guide member 82 as shown in Fig. 44. Then, the cam member 24 is made most close to the second wall 27a of the rotating member 25 as shown in Figs. 7, 10 and 25.

The first projection 43 is moved in the first slant portion 50 of the first hole 44 by the driving force of the motor 41 as the second drive source as shown in Fig. 36, and the CD changer 1 positions the drive chassis 42 in a position, in which the projection 29 of the one holder 19, which holds the CD 2 inserted in the apparatus main body 3 and ejects the CD 2 out of the apparatus main body 3, corresponds to the opening 32 of the guide groove 31 along the direction perpendicular to the arrow K.

Then, the CD changer 1 makes the guide groove 31 of the cam member 24 correspond to the projection 29 of the one holder 19 along the direction perpendicular to the arrow K as shown in Figs. 7, 10 and 26. The projection 29 of the holder 19 fourth from the top in Figs. 7, 10 and 26 corresponds to the guide groove 31 provided at the cam member 24.

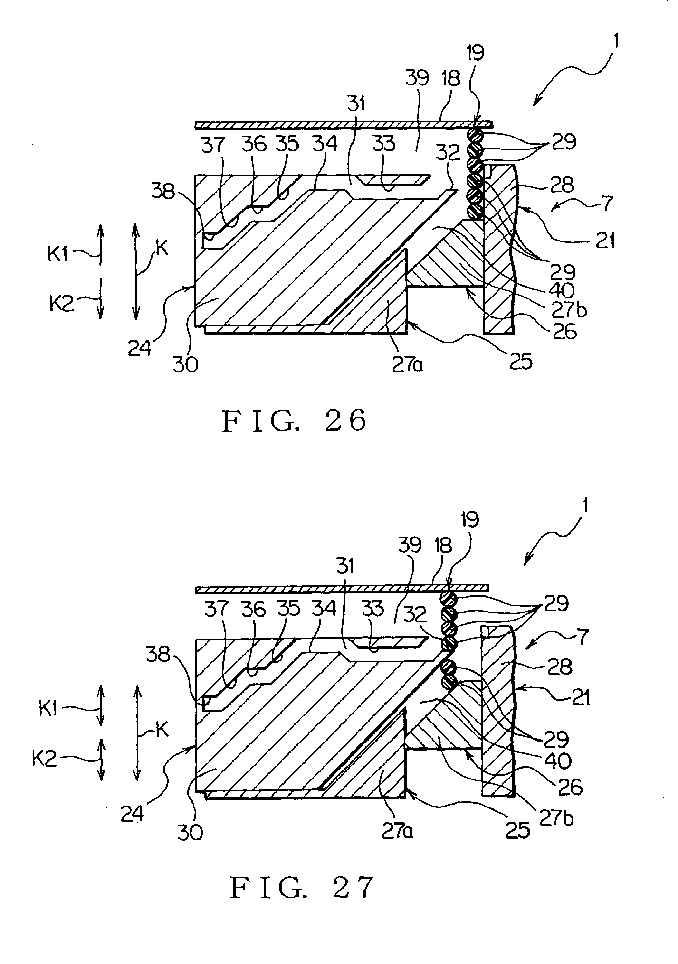

The CD changer 1 rotates the rotating member 25, the moving member 23 and the cam member 24 as the integrated one by the driving force of the motor 20. Thereafter, the projections 29 of all holders 19 move gradually apart from the connecting wall 28. Thereby, the projection 29 of the one holder 19 penetrates into the opening 32 of the guide groove 31 as shown in Fig. 27. Furthermore, the projections 29 of the other holders 19 abut on the wedge 30 of the cam member 24 and move in the first and second separated grooves 39, 40 by the wedge 30. Thereby, the one holder 19 and the other holders 19 move gradually apart from each other.

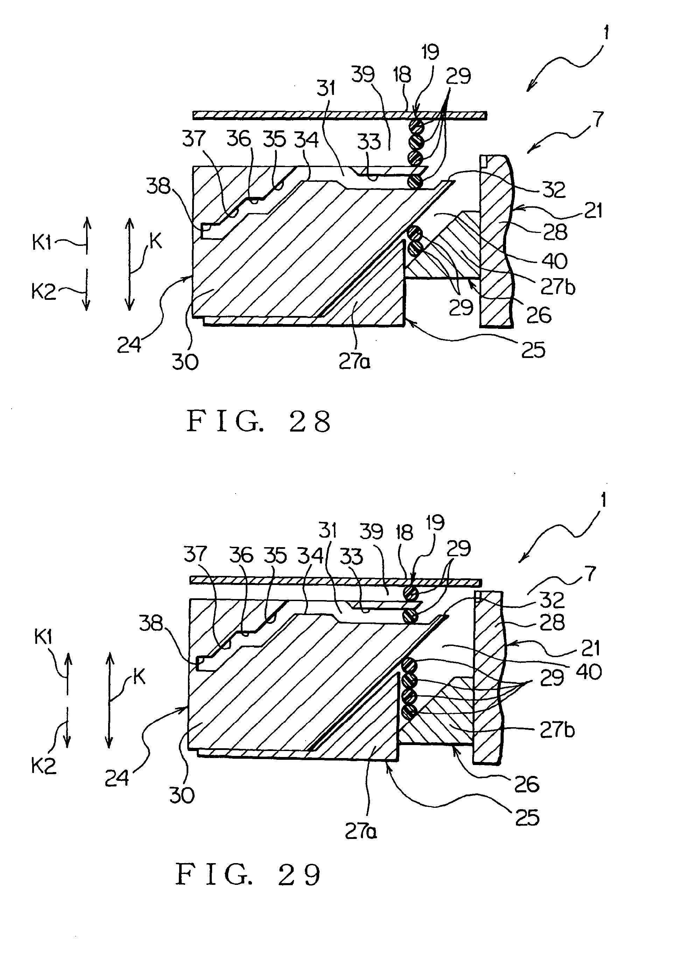

When the rotating member 25, the moving member 26 and the cam member 24 are rotated as the integrated one by the driving force of the motor 20, the projection 29 of the one holder 19 is positioned in the loading portion 33 of the guide groove 31 as shown in Figs. 11, 28. Furthermore, the projections 29 of the other holders 19 are moved toward deep sides of the first and second separated grooves 39, 40, that is a side apart from the connecting wall 28, by the wedge 30 of the cam member 24.

Then, the one holder 19 is positioned in the loading position by the guide groove 31 provided in the wedge 30 of the cam member 24, as shown in Figs. 11, 28. Furthermore, the one holder 19 is moved apart from the other holders 19 by the wedge 30 of the cam member 24 and the moving chassis 18 and the second wall 27, that is the first and second separated grooves 39, 40. Then, the other holders 19 are positioned by the first and second separated grooves 39, 40.

The roller 14 is rotated in accordance with the direction of inserting or ejecting the CD 2 by the driving force of the motor 41 as the second drive source. By rotating the roller 14, the CD 2 is inserted in or ejected from the apparatus main body 3 through the insertion opening 10. To stop inserting and ejecting the CD 2, the roller 14 is stopped to rotate and the rotating member 25, the moving member 26 and the cam member 24 are rotated in an opposite direction against the above direction by the driving force of the motor 20.

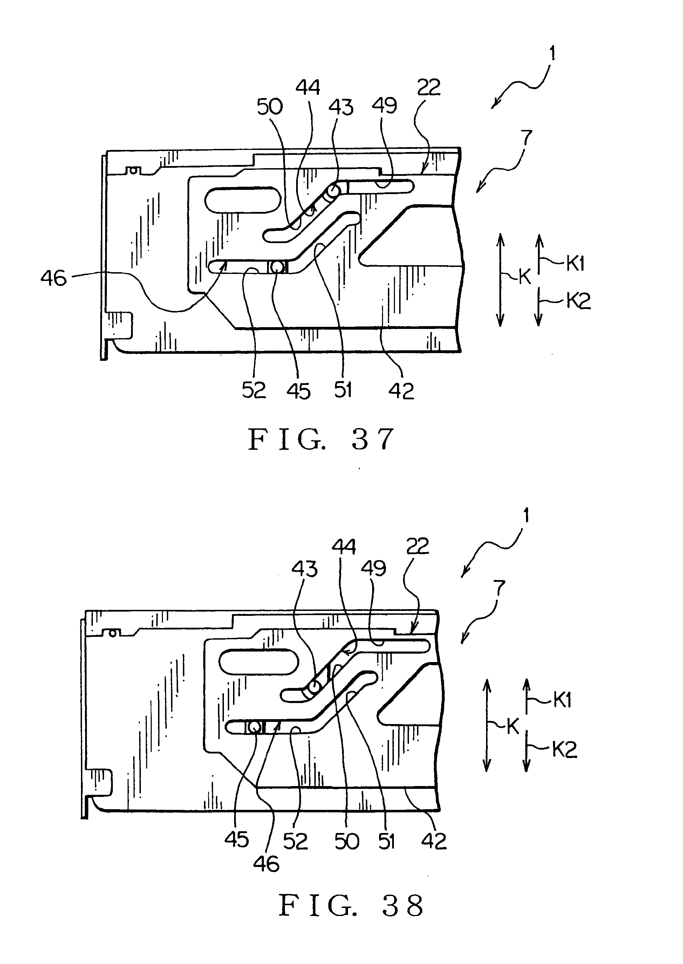

The cam member 24 is moved along the arrow K, and the width of the first separated groove 39 and the width of the second separated groove 40 are expanded or shrunken interlockingly therewith, thereby, the required holder 19 is positioned in the loading position and apart from the other holders 19. The holder 19 second from the top in Fig. 29 is positioned in the loading position, the holder 19 second from the bottom in Fig. 30 is positioned in the loading position by the same way. In a condition shown in Figs. 23, 24, the second projection 45 is positioned in the second parallel portion 52, and the first projection 43 is positioned in the first slant portion 50 as shown in Figs. 37, 38.

In this embodiment, the disk-transporting unit 4 includes the transporting roller 13 and the guide member 82, which are energized to move close to each other. In the insert/eject position, in which the CD 2 is inserted to or ejected from the apparatus main body 3, the pushing member 80, 81 move the transporting roller 13 apart from the guide member 82, and the CD 2 is clamped between the roller 14 of the transporting roller 13 and the guide member 82, and inserted to or ejected from the apparatus main body 3. At only time when the CD 2 is inserted to or ejected from the apparatus main body 3, the transporting roller 13 and the guide member 82 are separated from each other in the direction perpendicular (intersecting) to the main surface of the CD 2. When the CD 2 is not inserted to or not ejected from the apparatus main body 3, the transporting roller 13 and the guide member 82 are made close to each other.

Thereby, the whole thickness D of the disk-transporting unit 4 including the transporting roller 13 and the guide member 82 (shown in Fig. 43) at a time when the CD 2 is not inserted in or ejected from the apparatus main body 3, that is at a time when the disk-transporting unit 4 does not transport, is limited. Therefore, the disk-transporting unit 4, that is the whole CD changer 1 can be miniaturized.

In the above embodiment, in the vicinity of the one end, which is the insert/eject portion, that is the first position, the transporting roller 13 and the guide member 82 are separated, and in the other area, the transporting roller 13 and the guide member 82 are made close to each other. According to the present invention, in the insert/eject portion, that is in the vicinity of the one end, the transporting roller 13 and the guide member 82 must be separated, and in the receiving position, that is in the vicinity of the other end, the transporting roller 13 and the guide member 82 must be made close to each other, but between the insert/eject position and the receiving position, the transporting roller 13 and the guide member 82 may be separated or made close to each other.

One of the pair of clamp members is the transporting roller 13 to transport the CD 2, and the other is the guide member 82 to maintain the CD 2 in the transport path. Since the guide member 82 is made of synthetic resin, the thickness D of the disk-transporting unit 4 can be thinner than that in which the transporting rollers 13 are provided both at the upper and lower sides.

A position, in which the projection 82a of the guide member 82 touches the CD 2, and a position, in which the transporting roller 13 touches the CD 2, are separated along the direction of transporting the CD 2 (the depthwise direction Y of the apparatus main body 3). When the roller 14 of the transporting roller 13 and the guide member 82 approach to be close to each other, the thickness D of the disk-transporting unit 4 is furthermore shortened so as to prevent abutting of the projection 82a and the roller 14. Thereby, the CD changer 1 can be miniaturized as a whole.

The disk-transporting unit 4 is supported together with the disk-playback unit 5 to read information from the CD 2 by the load frame 84 (the moving chassis 16) and moved along the direction (the arrow K) intersecting the main surface of the CD 2. Thereby, a drive source specified only for moving the disk-transporting unit 4 is not required, so that increase of number of components is prevented and the CD changer 1 can be more miniaturized.

The projection 29 of the one holder 19 holding the selected any CD 2 is engaged with the guide groove 31. The projections 29 of the other holders 19 toward the arrow K1 (upper side) from the selected holder 19 are engaged with the first separated groove 39. The projections 29 of the other holders 19 toward the arrow K2 (lower side) from the selected one holder 19 are engaged with the second separated groove 40. Thus, engaging the projections 29 with the guide groove 31, the first separated groove 39 and the second separated grooves 40, the selected CD 2 is moved apart from the other CDs 2 and the information of the selected CD 2 is read out.

The widths of the first and second separated grooves 39, 40 are expanded and shrunken interlockingly to each other by the separated-groove expand/shrink mechanism 21. The sum of the widths of the first and second separated grooves 39, 40 is substantially equal to the product of the number by subtracting one from the number of the holders 19 and the width of the projection 29. Thereby, the one holder 19 holding the selected CD 2 and the other holders 19 can be positioned without rattling.

Thus, expanding and shrinking the widths of the first and second separated grooves 39, 40 interlockingly by the separated-groove expand/shrink mechanism 21 without a coil spring, the one holder 19 holding the selected any CD 2 can be separated from the other holders 19. Therefore, even if vibration of driving acts on the CD changer 1 installed in the car, the holder 19 can be prevented from vibration. Thereby, the one holder 19 holding the selected any CD 2 can be securely positioned in the playback position. Even if vibration of driving acts on the CD changer 1 installed in the car, the information of the selected any CD 2 can be played back securely.

The separated-groove expand/shrink mechanism 21 includes the moving member 26 and the cam member 24 mounted movably along the arrow K on the moving member 26. A space between the moving chassis 18 mounted on the moving member 26 and the wedge 30 of the cam member 24 forms the first separated groove 39. A space between the second wall 27b of the moving member 26 and the wedge 30 of the cam member 24 forms the second separated groove 40, and the guide groove 31 is formed at the wedge 30 of the cam member 24.

By sliding the cam member 24 along the arrow K, the widths of the first and second separated grooves 39, 40 can be securely changed (relatively) interlockingly. The cam member 24 slides in accordance with a position of the one holder 19 holding the selected any CD 2, the information of which is played back. Thereby, the one holder 19 holding the selected any CD 2 can be securely positioned in the playback position.

Since the cam member 24 and the optical pick-up 66 move as an integrated one (interlockingly), a relative position between the cam member 24 and the optical pick-up 66 can be preserved constant. Thereby, the information of the CD 2 held by the holder 19, which is positioned in the playback position by the guide groove 31 of the cam member 24, can be securely played back by the optical pick-up 66.

When the information is read out from the CD 2, the moving member 26 is moved toward the arrow K1, and the cam member 24 is slid in accordance with a position of the one holder 19 holding the selected any CD 2 to be read out. Therefore, for reading out the information from the CD 2, the any CD 2 can be positioned in the playback position. Thus, the information can be read out from the any CD 2 and played back.

When the CD 2 is inserted and ejected, the cam member 24 is moved toward the arrow K2, and the moving member 26 is slid in accordance with a position of the holder 19 corresponding to the position of the slide member 24 and the CD 2 to be inserted and ejected. Therefore, a relative position between the apparatus main body 3 and the holder 19, which will hold or holds the CD 2 to be inserted in and ejected from the main body 3, can be preserved constant. Thereby, the CD 2 can be securely inserted and ejected through the insert opening 10, and the CD 2 inserted in the apparatus main body 3 can be securely held in the holder 19.

Moving the holder 19 between the receiving position and the playback position and positioning the holder 19 in the loading position can be acted serially by the interlocking moving mechanism 22. Thereby, number of components can be decreased and the cost can be reduced. Additionally, an action of moving the holder 19 between the receiving position and the playback position and an action of inserting and ejecting CD 2 can be switched smoothly.

The interlocking moving mechanism 22 includes the drive chassis 42 provided with the first hole 44 and the second hole 46, the first projection 43 arranged at the moving chassis 18 of the disk-receiving unit 6 and the second projection 45 arranged at the moving chassis 16 of the disk-playback unit 5. The first hole 44 has the first slant portion 50 and the first parallel portion 49. The second hole 46 has the second slant portion 51 and the second parallel portion 52.

When the CD 2 is inserted and ejected, the second projection 45 moves in the second parallel portion 52, and the first projection 43 moves in the first slant portion 50. Thereby, when the CD 2 is inserted and ejected, the moving chassis 16 of the disk-playback unit 5, that is the cam member 24, is positioned without sliding. Furthermore, when the CD 2 is inserted and ejected, the moving chassis 18 of the disk-receiving unit 6 and the moving member 26, that is the holder 19, move along the arrow K.

Therefore, the relative position between the apparatus main body 3 and the holder 19, which will hold or holds the CD 2 to be inserted in and ejected from the apparatus main body 3, can be preserved constant. The CD 2 can be securely inserted and ejected through the insert opening 10, and the CD inserted in the apparatus main body 3 can be securely held in the holder 19.

When the holder 19 moves between the receiving position and the playback position, the first projection 43 moves in the first parallel portion 49, and the second projection 45 moves in the second slant portion 51. Thereby, when the holder 19 moves between the receiving position and the playback position, the moving chassis 18 and the moving member 26, that is the holder 19, of the disk-receiving unit 6 can be positioned without sliding. Furthermore, when the holder 19 moves between the receiving position and the playback position, the moving chassis 16 of the disk-playback unit 5, that is the cam member 24, moves along the arrow K.

Then, when the information of the CD 2 is read out, any CD 2 can be securely positioned in the playback position. Thus, the information can be read out from the CD 2 and played back.

The moving member 26 is formed into a cylindrical shape and the cam member 24 is formed into a tubular shape. The moving chassis 18 and the second wall 27 are mounted at each end of the moving member 26. The moving member 26, the cam member 24 and the rotating member 25 are arranged coaxially and rotated as the integrated one by the driving force of the motor 20. By rotating the moving member 26, the cam member 24 and the rotating member 25, the holder 19 can be moved between the receiving position and the playback position. Thereby, moving path of the moving member 26, the cam member 24 and the rotating member 25 can be minimized, so that the apparatus main body 3, that is the CD changer 1, can be miniaturized.

The cam member 24 and the moving member 26 are slid along the arrow K by the one motor 41. Thereby, number of the components can be limited, so that the CD changer 1 can be miniaturized and the cost thereof can be reduced.

In the above embodiment, the CD changer 1 receiving plural CDs 2 as information recording disk media is shown. The present invention can be applied to an MD changer, which receives plural MDs (Mini Discs) as disc-shape recording media, and any information recording medium playback apparatus receiving any plural disc-shape information recording media such as DVDs (Digital Versatile Disc). The present invention also can be applied to an information recording medium playback apparatus, which receives one information recording medium such as the aforesaid MD or DVD, and reads out information recorded on the one information recording medium.

In the above embodiment, the disk-transporting unit 4 and the disk-playback unit 5 can freely move integrally along the arrow K. According to the present invention, the disk-transporting unit 4 and the disk-playback unit 5 may freely move interlockingly along the arrow K, and the disk-transporting unit 4 and the disk-playback unit 5 are not required to move interlockingly (integrally) along the arrow K.

The transporting roller 13 is separated from the guide member 82, so that the CD 2 is clamped between the roller 14 of the transporting roller 13 and the guide member 82, and inserted in and ejected from the apparatus main body 3. According to the present invention, the guide member 82 is separated from the transporting roller 13, so that the CD 2 may be clamped between the roller 14 of the transporting roller 13 and the guide member 82, and inserted in and ejected from the apparatus main body 3.

In the above embodiment, the cam member 24, the rotating member 25 and the moving member 26 are formed into a cylindrical shape, and moved by rotating around the axis thereof. According to the present invention, the cam member 24, the rotating member 25 and the moving member 26 can be formed to a plate shape other than the cylindrical shape and the tubular shape so as to be moved in a direction other than rotation around the axis, such as sliding.

In the above embodiment, the cam member 24 and the optical pick-up 66 are moved as an integrated one. According to the present invention, the cam member 24 and the optical pick-up 66 are not required to move as the integrated one. According to the present invention, it is sufficient that the relative position between the cam member 24 and the optical pick-up 66 are maintained constant by moving them interlockingly.

In the above embodiment, the cam member 24 and the moving member 26 can be moved by the interlocking moving mechanism 22 with the one drive source. According to the present invention, the cam member 24 and the moving member 26 can be moved by independent drive sources to each other.

According to the above embodiment, the following CD changer 1 can be given.

Appendix 1: A CD changer 1 includes an apparatus main body 3 receiving an inserted CD 2; and
a disk-transporting unit 4 transporting the CD 2 inserted in the apparatus main body 3 to a receiving position of the apparatus main body 3,
wherein the disk-transporting unit 4 includes a transporting roller 13 and a guide member 82 for clamping the CD 2 to be transported, and moves within a predetermined range in a direction K intersecting a main surface of the CD 2 received in the apparatus main body 3,
wherein the transporting roller 13 and the guide member 82 in one position within the predetermined range are separated from each other in a direction intersecting the main surface of the CD 2, and the transporting roller 13 and the guide member 82 in the other position within the predetermined range is close to each other.

Appendix 2: The CD changer 1 according to Appendix 1 is characterized in that the one position is a vicinity of one end of the predetermined range, and the other position is a vicinity of the other end of the predetermined range.

Appendix 3: The CD changer 1 according to Appendix 1 is characterized in that the CD changer 1 furthermore includes a playback unit reading information from the CD 2 and a moving chassis 16 supporting the disk-transporting unit 4 and the playback unit, and the disk-transporting unit 4 is moved together with the playback unit within the predetermined range by moving the moving chassis 16.

The above embodiment is one possible embodiment of the invention, and is not limit by the present invention. Various changes can be made without departing from the scope of the present invention.

## Claims

1. An information recording medium playback apparatus comprising:
an apparatus main body receiving an information recording medium; and
a transporting unit transporting the information recording medium inserted in the apparatus main body to a receiving position of the apparatus main body,
wherein the transporting unit includes a pair of clamp members clamping the information recording medium to be transported, and moves within a predetermined range in a direction intersecting a main surface of the information recording medium received in the apparatus main body,
wherein the clamp members in one position within the predetermined range are separated from each other in the direction intersecting the main surface of the information recording medium, and the clamp members in the other position within the predetermined range is close to each other.

2. The information recording medium playback apparatus according to claim 1, wherein the one position is a vicinity of one end of the predetermined range, and the other position is a vicinity of the other end of the predetermined range.

3. The information recording medium playback apparatus according to claim 1, further comprising:
a playback unit reading information from the information recording medium; and
a support member supporting both the transporting unit and the playback unit,
wherein the transporting unit is moved together with the playback unit within the predetermined range by moving the support member.
